# EUROPEAN PATENT APPLICATION

(11) **EP 4 098 693 A1**
(43) Date of publication of application: **07.12.2022**
(21) Application number: 21748367.6
(22) Date of filing: 26.01.2021
(51) Int. Cl.: C08L 23/08, C08L 23/26, C08L 77/00

(54) **POLYAMIDE COMPOSITION**

(30) Priority: 30.01.2020 JP 2020013670
(71) Applicant: Mitsui Chemicals, Inc., Tokyo 105-7122 (JP)
(72) Inventor: YOSHIDA Yuto, Sodegaura-shi, Chiba 299-0265 (JP); YAMAGUCHI Tomohiro, Tokyo 105-7122 (JP); KAMIYA Nozomi, Ichihara-shi, Chiba 299-0108 (JP)
(74) Representative: Hoffmann Eitle
(86) International application number: PCT/JP2021/002544
(87) International publication number: WO 2021/153532

(57) **Abstract**

An object of the present invention is to provide a polyamide composition excellent in balance between fluidity during molding and, for example, surface appearance, bleed-out resistance, impact resistance and rigidity in the form of a molded article, and the present invention relates to a polyamide composition including 40.0 to 98.9 mass% of a polyamide (A), 1.0 to 40.0 mass% of an ethylene/α-olefin copolymer (B) satisfying the following requirements (b-1) to (b-3), and 0.1 to 20.0 mass% of an ethylene/α-olefin copolymer (C) satisfying the following requirements (c-1) to (c-5) [provided that (A) + (B) + (C) = 100 mass%.] . (b-1) Having a melt flow rate (MFR) measured at 230°C and at a load of 2.16 kg of 0.1 to 200 g/10 min. (b-2) Having a content M_{B} of a backbone unit derived from a vinyl compound having a polar group being 0.01 to 10 mass%. (b-3) Including 50 to 95 mol% of a backbone unit derived from ethylene and 5 to 50 mol% of a backbone unit derived from a C3-C8 α-olefin (provided that a total amount of the backbone unit derived from ethylene and the backbone unit derived from the α-olefin is 100 mol%). (c-1) Having a Brookfield viscosity (BF viscosity) at 150°C of 1 to 5000 mPa·s. (c-2) Being a modified copolymer to which a substituent other than a saturated hydrocarbon is imparted, and having a content M_{C} of the substituent imparted being 0.1 to 20 mass%. (c-3) Including 30 to 80 mol% of a backbone unit derived from ethylene and 20 to 70 mol% of a backbone unit derived from a C3-C20 α-olefin (provided that a total amount of the backbone unit derived from ethylene and the backbone unit derived from a C3-C20 α-olefin is 100 mol%). (c-4) Having no observed melting point in a temperature range from -100°C to 150°C as measured in differential scanning calorimetry (DSC). (c-5) Having a weight average molecular weight (Mw) determined by gel permeation chromatography (GPC) of in a range from 1,000 to 50,000.

## Description

### Technical Field

The present invention relates to a polyamide composition including modified ethylene/α-olefin copolymers having specific requirements, and a molded article obtained therefrom.

### Background Art

Polyamides (nylons) are expected to be highly demanded as engineering plastics due to excellent properties thereof. However, polyamides still cannot be said to be generally sufficient in balance between mechanical strength such as impact resistance or rigidity and fluidity during molding, and are variously studied about improvements.

Patent Document 1 proposes, as a method for improving impact resistance of polyamide, for example, a method including compounding an ethylene/α-olefin copolymer to which α,β-unsaturated carboxylic acid is grafted, with polyamide. However, it is confirmed that a polyamide composition proposed, if tried to be enhanced in impact resistance, tends to be deteriorated in rigidity and fluidity.

Examples of methods for improving fluidity of polyamides include methods using polyamides low in molecular weight and methods using fluidity modifiers (plasticizers and/or waxes). However, such methods have the problems of causing deterioration in impact strength, and the occurrence of gas, silver streaks and pinholes during molding, and applications thereof are restricted. For example, Patent Document 2 discloses a polyamide composition improved in fluidity by use of a liquid ethylene/α-olefin random copolymer, but it is confirmed that impact strength tends to be insufficient. In the case of addition of low-molecular weight components or liquid components as described above, a problem may be that bleed-out from molded articles after molding is caused, and there is a demand for even more studies about the problem.

Patent Documents 3 and 4 disclose a polyamide composition excellent in mechanical strength, moldability and surface appearance, obtained by using a specific diamine as a diamine component constituting polyamide, but the effect still cannot be said to be sufficient. Patent Document 5 discloses a polyamide composition excellent in balance between impact resistance and heat resistance, obtained by compounding a homopolypropylene or a specific acid-modified polyolefin with polyamide, but does not here make any sufficient studies about flexibility and moldability (spiral flowability during injection molding). If the difference in viscosity between polymers during melting in mixing of the polymers is large as in Patent Document 5, distribution/dispersion of the polymers may not be performed well and lumps may occur to impair surface appearance, and a further improvement from this viewpoint is also expected.

Accordingly, there is a demand for creating a polyamide resin composition which retains mechanical strength (rigidity) inherent to polyamide with no loss as much as possible and furthermore which is excellent in fluidity during molding (spiral flowability during injection molding) and which provides a molded article excellent in surface appearance, bleed-out resistance and impact resistance.

### Citation List

### Patent Documents

Patent Document 1: JP H9-087475A
Patent Document 2: JP H4-239566A
Patent Document 3: JP2008-095066A
Patent Document 4: JP2011-148267A
Patent Document 5: JP2015-010100A

### Summary of Invention

### Technical Problem

An object of the present invention is to solve the above problems, namely, to provide a polyamide composition excellent in balance between fluidity during molding and, for example, surface appearance, bleed-out resistance, impact resistance and rigidity in the form of a molded article.

### Solution to Problem

The present inventors have made intensive studies in order to solve the above problems, and as a result, have found that a polyamide composition excellent in balance between fluidity during molding and, for example, surface appearance, bleed-out resistance, impact resistance and rigidity in the form of a molded article is obtained by using specific modified ethylene/α-olefin copolymers (B) and (C).

In other words, the present invention relates to the following [1] to [12].
[1] A polyamide composition comprising:
   40.0 to 98.9 mass% of a polyamide (A);
   1.0 to 40.0 mass% of an ethylene/α-olefin copolymer (B) satisfying the following requirements (b-1) to (b-3); and
   0.1 to 20.0 mass% of an ethylene/α-olefin copolymer (C) satisfying the following requirements (c-1) to (c-5), provided that (A) + (B) + (C) = 100 mass%;
   (b-1) having a melt flow rate (MFR) measured at 230°C and at a load of 2.16 kg of 0.1 to 200 g/10 min;
   (b-2) having a content M_{B} of a backbone unit derived from a vinyl compound having a polar group being 0.01 to 10 mass%; and
   (b-3) comprising 50 to 95 mol% of a backbone unit derived from ethylene and 5 to 50 mol% of a backbone unit derived from a C3-C8 α-olefin, provided that a total amount of the backbone unit derived from ethylene and the backbone unit derived from the α-olefin is 100 mol%; and
   (c-1) having a Brookfield viscosity (BF viscosity) at 150°C of 1 to 5000 mPa·s;
   (c-2) being a modified copolymer to which a substituent other than a saturated hydrocarbon is imparted, and having a content Mc of the substituent imparted being 0.1 to 20 mass%;
   (c-3) comprising 30 to 80 mol% of a backbone unit derived from ethylene and 20 to 70 mol% of a backbone unit derived from a C3-C20 α-olefin, provided that a total amount of the backbone unit derived from ethylene and the backbone unit derived from a C3-C20 α-olefin is 100 mol%;
   (c-4) having no observed melting point in a temperature range from -100°C to 150°C as measured in differential scanning calorimetry (DSC); and
   (c-5) having a weight average molecular weight (Mw) determined by gel permeation chromatography (GPC) of in a range from 1,000 to 50,000.
[2] The polyamide composition according to Item [1], wherein the ethylene/α-olefin copolymer (C) in the requirement (c-2) is a modified copolymer modified by one or more selected from a compound having a substituent other than a saturated hydrocarbon group and having a carbon-carbon unsaturated bond.
[3] The polyamide composition according to any one of Item [1] or [2], wherein the ethylene/α-olefin copolymer (C) further satisfies the following requirement (c-6):
   (c-6) having a density D_{C} of the ethylene/α-olefin copolymer (C) as measured according to JIS K2249 being 820 to 910 kg/m³, and having a difference |D_{B}-D_{C}| of the density D_{C} from a density D_{B} of the ethylene/α-olefin copolymer (B) as measured according to ASTM D1505 being 50 kg/m³ or less.
[4] The polyamide composition according to any one of Items [1] to [3], wherein the polar group in the requirement (b-2) is a carboxyl group or a carboxylic anhydride.
[5] The polyamide composition according to any one of Items [1] to [4], wherein the ethylene/α-olefin copolymer (C) in the requirement (c-2) is a modified copolymer modified by one or more compounds selected from an unsaturated carboxylic acid and an unsaturated carboxylic acid derivative, and the copolymer (C) satisfies the following requirement (c-7):
   (c-7) an acid value is 0.1 to 200 mgKOH/g.
[6] The polyamide composition according to any one of Items [1] to [5], wherein the vinyl compound having a polar group in the requirement (b-2) is one or more selected from maleic acid and maleic anhydride.
[7] The polyamide composition according to any one of Items [1] to [6], wherein the ethylene/α-olefin copolymer (C) in the requirement (c-2) is a modified copolymer modified by one or more compounds selected from maleic acid and maleic anhydride.
[8] The polyamide composition according to any one of Items [1] to [7], wherein the ethylene/α-olefin copolymer (C) in the requirement (c-2) is a modified copolymer modified by one or more compounds selected from maleic acid and maleic anhydride, and the content M_{c} of the substituent imparted is more than 5 mass% and 20 mass% or less.
[9] The polyamide composition according to any one of Item [1] to [8], wherein the ethylene/α-olefin copolymer (C) in the requirement (c-5) has a weight average molecular weight (Mw) determined by gel permeation chromatography (GPC) in a range of more than 25,000 and 50,000 or less.
[10] A filler-containing polyamide composition comprising the polyamide resin composition according to any one of Items [1] to [9], and 1 to 100 parts by mass of an inorganic filler per 100 parts by mass of the polyamide composition.
[11] A molded article comprising the polyamide composition according to any one of Items [1] to [9] or the filler-containing polyamide composition according to Item [10].
[12] A method for producing a polyamide composition, comprising:
   a step of mixing
      40.0 to 98.9 mass% of a polyamide (A),
      1.0 to 40.0 mass% of an ethylene/α-olefin copolymer (B) satisfying the following requirements (b-1) to (b-3), and
      an ethylene/α-olefin copolymer (C') produced by the following process (α) and satisfying the following requirements (c-1) to (c-5) so that a content of the copolymer (C') is 0.1 to 20.0 mass%;
   (b-1) having a melt flow rate (MFR) measured at 230°C and at a load of 2.16 kg of 0.1 to 200 g/10 min;
   (b-2) having a content M_{B} of a backbone unit derived from a vinyl compound having a polar group being 0.01 to 10 mass%; and
   (b-3) comprising 50 to 95 mol% of a backbone unit derived from ethylene and 5 to 50 mol% of a backbone unit derived from a C3-C8 α-olefin, provided that a total amount of the backbone unit derived from ethylene and the backbone unit derived from the α-olefin is 100 mol%; and
   (c-1) having a Brookfield viscosity (BF viscosity) at 150°C of 1 to 5000 mPa·s;
   (c-2) being a modified copolymer to which a substituent other than a saturated hydrocarbon is imparted, and having a content Mc of the substituent imparted being 0.1 to 20 mass%;
   (c-3) comprising 30 to 80 mol% of a backbone unit derived from ethylene and 20 to 70 mol% of a backbone unit derived from a C3-C20 α-olefin, provided that a total amount of the backbone unit derived from ethylene and the backbone unit derived from a C3-C20 α-olefin is 100 mol%;
   (c-4) having no observed melting point in a temperature range from -100°C to 150°C as measured in differential scanning calorimetry (DSC); and
   (c-5) having a weight average molecular weight (Mw) determined by gel permeation chromatography (GPC) of in a range from 1,000 to 50,000;
   process (α): a process comprising
      a step of solution polymerization of ethylene and the α-olefin in the presence of a catalyst system including
      a bridged metallocene compound (a) represented by formula 1, and
      at least one compound (b) selected from the group consisting of an organoaluminum oxy compound (b1) and a compound (b2) that reacts with the bridged metallocene compound (a) to form an ion pair;

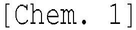

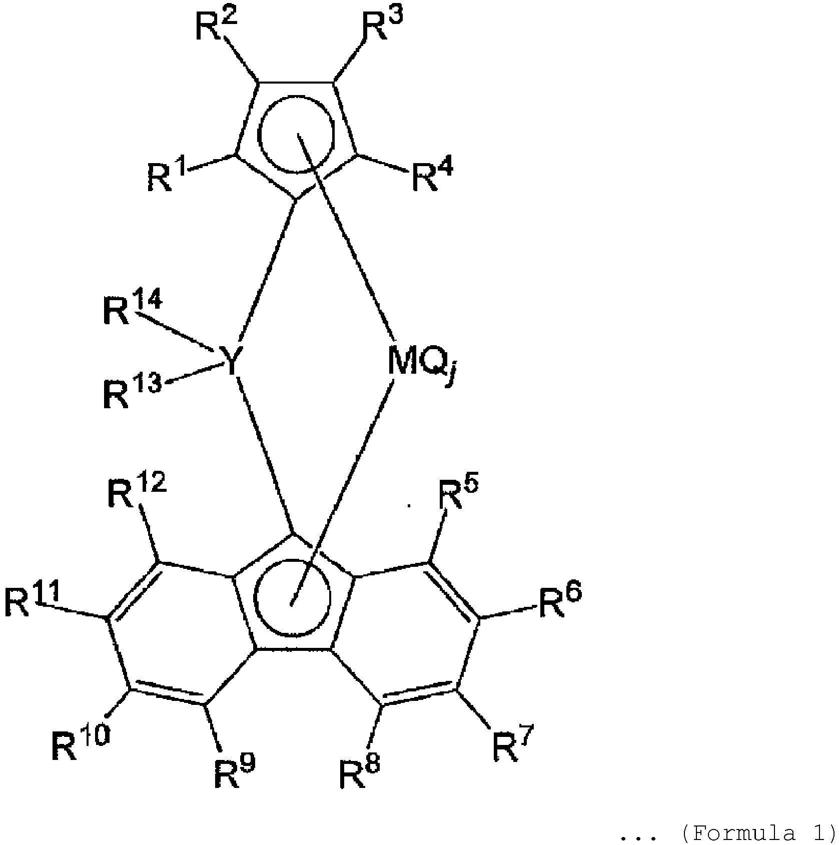

      wherein R¹, R², R³, R⁴, R⁵, R⁸, R⁹ and R¹² are each independently a hydrogen atom, a hydrocarbon group or a silicon-containing hydrocarbon group, and a plurality of adjacent groups among R¹, R², R³, R⁴, R⁵, R⁸, R⁹ and R¹² may be linked to each other to form a ring structure,
      R⁶ and R¹¹ are the same groups as each other, and are each a hydrogen atom, a hydrocarbon group or a silicon-containing hydrocarbon group,
      R⁷ and R¹⁰ are the same groups as each other, and are each a hydrogen atom, a hydrocarbon group or a silicon-containing hydrocarbon group,
      R⁶ and R⁷ may be bonded to a C2-C3 hydrocarbon to form a ring structure,
      R¹⁰ and R¹¹ may be bonded to a C2-C3 hydrocarbon to form a ring structure,
      R⁶, R⁷, R¹⁰ and R¹¹ are not hydrogen atoms at the same time;
      Y is a carbon atom or a silicon atom;
      either or both of R¹³ and R¹⁴ is/are each independently an aryl group;
      M is Ti, Zr or Hf;
      Q is independently a halogen atom, a hydrocarbon group, an anion ligand, or a neutral ligand capable of coordinating to a lone electron pair; and
      j is an integer of 1 to 4.

### Advantageous Effects of Invention

According to the present invention, there can be provided a polyamide composition excellent in balance between fluidity during molding and, for example, surface appearance, bleed-out resistance, impact resistance and rigidity in the form of a molded article.

### Description of Embodiments

### [Polyamide (A)]

The polyamide (A) for use in the present invention is not particularly limited, and any conventionally known polyamide (also referred to as nylon) can be used without limitation as long as the effects of the present invention are not impaired. For example, lactam, or a melt-moldable polyamide obtained by a polycondensation reaction of diamine and dicarboxylic acid can be used. Specific examples of the polyamide (A) include the following polymers.
(1) Polycondensates of organic C4-C12 dicarboxylic acids and organic C2-C13 diamines, for example, polyhexamethylene adipamide [6,6 nylon] that is a polycondensate of hexamethylenediamine and adipic acid, polyhexamethylene azelamide [6,9 nylon] that is a polycondensate of hexamethylenediamine and azelaic acid, polyhexamethylene sebacamide [6,10 nylon] that is a polycondensate of hexamethylenediamine and sebacic acid, polyhexamethylene dodecanoamide [6,12 nylon] that is a polycondensate of hexamethylenediamine and dodecanedioic acid, semi-aromatic polyamides (PA6T, PA9T, PA10T, and PA11T) that are polycondensates of aromatic dicarboxylic acids and aliphatic diamines, and polybis(4-aminocyclohexyl)methanedodecane that is a polycondensate of bis-p-aminocyclohexylmethane and dodecanedioic acid.

Examples of the organic dicarboxylic acids include adipic acid, pimelic acid, suberic acid, phthalic acid, terephthalic acid, isophthalic acid, naphthalenedicarboxylic acid, phenylenedioxydiacetic acid, oxydibenzoic acid, diphenylmethanedicarboxylic acid, diphenylsulfonedicarboxylic acid, biphenyldicarboxylic acid, sebacic acid and dodecanoic acid. Examples of the organic diamines include hexamethylenediamine, octamethylenediamine, nonanediamine, octanediamine, decanediamine, undecadiamine, undecanediamine and dodecanediamine.

(2) Polycondensates of ω-amino acids, for example, polyundecaneamide [11 nylon] that is a polycondensate of ω-aminoundecanoic acid.

(3) Ring-opening polymerized products of lactams, for example, polycapramide [6 nylon] that is a ring-opening polymerized product of ε-caprolactam, and polylaurinlactam [12 nylon] that is a ring-opening polymerized product of ω-laurolactam.

Among the above exemplified polyamides (A), polyhexamethylene adipamide [6,6 nylon], polyhexamethylene azelamide [6,9 nylon], polycapramide [6 nylon], and polylaurinlactam [12 nylon] are preferable.

The melting point of the polyamide (A) is preferably 150°C to 260°C, more preferably 150 to 250°C. The melting point is preferably equal to or less than the upper limit value in that the ethylene/α-olefin copolymer (C) is inhibited from being decomposed or volatized when molded. The melting point is preferably equal to or more than the lower limit value in terms of impact strength of the resulting composition.

The polyamide (A) for use in the present invention can be, for example, a polyamide produced from adipic acid, isophthalic acid and hexamethylenediamine, or a blended product obtained by compounding two or more polyamides, like a mixture of 6 nylon and 6,6 nylon.

### [Ethylene/α-olefin copolymer (B)]

The ethylene/α-olefin copolymer (B) for use in the present invention satisfies the following requirements (b-1) to (b-3).

(b-1) Having a melt flow rate (MFR) measured at 230°C and at a load of 2.16 kg of 0.01 to 200 g/10 min.

The melt flow rate (MFR) is preferably 0.1 to 100 g/10 min, more preferably 0.1 to 10 g/10 min. By controlling the MFR of the ethylene/α-olefin copolymer (B) in the range, a polyamide composition is obtained which is excellent in balance between impact resistance and fluidity during molding.

(b-2) Having a content M_{B} (hereinafter, also simply referred to as amount of modification M_{B}) of a backbone unit derived from a vinyl compound having a polar group being 0.1 to 10.0 mass%.

The amount of modification M_{B} is preferably 0.2 to 3.0 mass%, more preferably 0.3 to 1.5 mass%. A too small amount of modification M_{B} may cause a molded article to be deteriorated in impact resistance. On the other hand, a too large amount of modification M_{B} results in the need for increases in amounts of a polar monomer and organic peroxide charged during modification in a usual modification method, and such a modification method may cause any foreign substance such as gel to be incorporated into the ethylene/α-olefin copolymer (B) as a modified polyolefin. The amount of modification M_{B} is determined from a calibration curve separately created based on a peak intensity at a wavenumber of 1780 cm-1 assigned to a carbonyl group in FT-IR, as described below.

The polar group is preferably a carboxyl group, and the backbone unit derived from a vinyl compound having a polar group is preferably a backbone unit derived from maleic acid or anhydride thereof.

(b-3) Including 50 to 95 mol% of a backbone unit derived from ethylene and 5 to 50 mol% of a backbone unit derived from a C3-C8 α-olefin (provided that the total amount of the backbone unit derived from ethylene and the backbone unit derived from the α-olefin is 100 mol%).

The backbone unit derived from ethylene preferably occupies 60 to 92 mol%, more preferably 70 to 90 mol%, further preferably 75 to 88 mol%, particularly preferably 80 to 88 mol%. The backbone unit derived from a C3-C8 α-olefin preferably occupies 8 to 40 mol%, more preferably 10 to 30 mol%, further preferably 12 to 25 mol%, particularly preferably 12 to 20 mol%. When the respective backbone units are present in these ranges, the copolymer (B) is favorable in flexibility and easily handled and furthermore a polyamide composition can be obtained which can provide a molded article excellent in low-temperature impact resistance and flexibility.

Examples of the C3-C8 α-olefin include propylene, 1-butene, 1-pentene, 3-methyl-1-butene, 1-hexene, 3-methyl-1-pentene, 4-methyl-1-pentene, 1-heptene, 3-ethyl-1-pentene, 4,4-dimethyl-1-pentene, 4-methyl-1-hexene, 1-octene, 4,4-dimethyl-1-hexene, 4-ethyl-1-hexene, 3-ethyl-1-hexene, and combinations thereof. In particular, propylene, 1-butene and 1-octene are particularly preferable.

The ethylene/α-olefin copolymer (B) for use in the present invention may include a backbone unit derived from other constituent component, besides the backbone unit derived from ethylene and the backbone unit derived from the C3-C8 α-olefin. The content of the backbone unit derived from other constituent component may be any content as long as the effects of the invention are not impaired, and the content in the entire copolymer (B) is, for example, 10 mol% or less, more preferably 5 mol% or less.

Specific examples of such other constituent component include C9 or higher α-olefins such as 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene, C3-C30, preferably C3-C20 cyclic olefins such as cyclopentene, cycloheptene, norbornene, 5-methyl-2-norbornene and tetracyclododecene, linear non-conjugated dienes such as 1,4-hexadiene, 1,6-octadiene, 2-methyl-1,5-hexadiene, 6-methyl-1,5-heptadiene and 7-methyl-1,6-octadiene, cyclic non-conjugated dienes such as 1,4-cyclohexadiene, dicyclopentadiene, methyltetrahydroindene, 5-vinylnorbornene, 5-ethylidene-2-norbornene, 5-methylene-2-norbornene, 5-isopropylidene-2-norbornene and 6-chloromethyl-5-isopropenyl-2-norbornene, non-conjugated dienes or trienes such as 2,3-diisopropylidene-5-norbornene, 2-ethylidene-3-isopropylidene-5-norbornene, 2-propenyl-2,2-norbornadiene, 1,3,7-octatriene and 1,4,9-decatriene, α,β-unsaturated carboxylic acids such as acrylic acid, methacrylic acid, fumaric acid and maleic acid and metal salts thereof such as sodium salts thereof, α,β-unsaturated carboxylic esters such as methyl acrylate, ethyl acrylate, n-propyl acrylate, methyl methacrylate and ethyl methacrylate, vinyl esters such as vinyl acetate and vinyl propionate, polar group-containing monomers such as unsaturated glycidyls such as glycidyl acrylate and glycidyl methacrylate, and aromatic vinyl compounds such as styrene, o-methylstyrene, m-methylstyrene, p-methylstyrene, o,p-dimethylstyrene, methoxystyrene, vinylbenzoic acid, methyl vinylbenzoate, vinylbenzyl acetate, hydroxystyrene, p-chlorostyrene, divinylbenzene, α-methylstyrene and allylbenzene.

The ethylene/α-olefin copolymer (B) for use in the present invention satisfies the above requirements (b-1) to (b-3), and preferably further satisfies the following requirement (b-4).

(b-4) Having a density D_{B} of the ethylene/α-olefin copolymer (B), as measured according to ASTM D1505, of 820 to 900 kg/m³.

The density D_{B} of the ethylene/α-olefin copolymer (B) is preferably 830 to 890 kg/m³, more preferably 850 to 890 kg/m³, particularly preferably 850 to 880 kg/m³. The density D_{B} is preferably in such a range because the copolymer (B) is favorable in flexibility and a polyamide composition is easily obtained which can provide a molded article excellent in low-temperature impact resistance and flexibility.

### [Method for producing ethylene/α-olefin copolymer (B)]

The ethylene/α-olefin copolymer (B) for use in the present invention can be obtained by graft modification of an ethylene/α-olefin copolymer (r) by a vinyl compound having a polar group, such as maleic acid or anhydride thereof.

The ethylene/α-olefin copolymer (r) includes 50 to 95 mol% of a backbone unit derived from ethylene and 5 to 50 mol% of a backbone unit derived from an C3-C8 α-olefin (provided that the total amount of the backbone unit derived from ethylene and the backbone unit derived from the α-olefin is 100 mol%).

The ethylene/α-olefin copolymer (r) has an MFR, as measured at 230°C and at a load of 2.16 kg, of 0.01 to 200 g/10 min, preferably 0.1 g to 100 g, more preferably 0.1 to 10 g/10 min. When the MFR is in such a range, blending properties of the ethylene/α-olefin copolymer (B) obtained and the polyamide (A) are favorable. Moreover, use of the ethylene/α-olefin copolymer (r) satisfying this condition can give a polyamide resin composition excellent in moldability.

The ethylene/α-olefin copolymer (r) having the above properties can be produced by a conventionally known method using, for example, a vanadium catalyst including a soluble vanadium compound and an alkylaluminum halide compound, or a metallocene catalyst (for example, a metallocene catalyst described in WO97/10295) including a metallocene compound of zirconium and an organoaluminum oxy compound.

The ethylene/α-olefin copolymer (B) is obtained by graft polymerization of a vinyl compound having a polar group, such as maleic acid or anhydride thereof, to the above-described ethylene/α-olefin copolymer (r) preferably in the presence of a radical initiator, if necessary, with addition of an additive described below.

The amount of maleic acid or anhydride thereof charged is usually 0.010 to 15 parts by mass, preferably 0.010 to 5.0 parts by mass per 100 parts by mass of the ethylene/α-olefin copolymer (r). The amount of the radical initiator used is usually 0.0010 to 1.0 part by mass, preferably 0.0010 to 0.30 parts by mass per 100 parts by mass of the ethylene/α-olefin copolymer (r).

The radical initiator here used can be, for example, organic peroxide, an azo compound or a metal hydroxide. Examples of the organic peroxide include benzoyl peroxide, dichlorobenzoyl peroxide and dicumyl peroxide, and examples of the azo compound include azobisisobutyronitrile and dimethyl azoisobutyrate.

The radical initiator can be directly mixed with maleic acid or anhydride thereof and a polyolefin which is not modified or other component and then used, or can be dissolved in a small amount of an organic solvent and then used. The organic solvent is not particularly limited as long as it is an organic solvent that can dissolve the radical initiator.

The graft modification by maleic acid or anhydride thereof can be performed by a conventionally known method.

Examples include a method including dissolving the ethylene/α-olefin copolymer (r) in the organic solvent and then adding to a resultant solution, for example, maleic acid or anhydride thereof and the radical initiator, and allowing a reaction to occur at a temperature of 70 to 200°C, preferably 80 to 190°C, for 0.5 to 15 hours, preferably 1 to 10 hours.

A modified product can also be produced by a reaction of maleic acid or anhydride thereof and the ethylene/α-olefin copolymer (r) in no solvent in the presence of the radical initiator by use of, for example, an extruder. The reaction is desirably performed usually at a temperature equal to or more than the melting point of the ethylene/α-olefin copolymer (r) for usually 0.5 to 10 minutes.

The vinyl compound having a polar group, used in modification, can be, for example, a vinyl compound having an oxygen-containing group such as acid, acid anhydride, ester, alcohol, epoxy or ether, a vinyl compound having a nitrogen-containing group such as isocyanate or amide, or a vinyl compound having a silicon-containing group such as vinylsilane.

In particular, a vinyl compound having an oxygen-containing group is preferable, and specifically, for example, an unsaturated epoxy monomer, an unsaturated carboxylic acid and a derivative thereof are preferable. The unsaturated epoxy monomer is, for example, an unsaturated glycidyl ether or an unsaturated glycidyl ester (for example, glycidyl methacrylate). The unsaturated carboxylic acid is, for example, acrylic acid, maleic acid, fumaric acid, tetrahydrophthalic acid, itaconic acid, citraconic acid, crotonic acid, isocrotonic acid or nadic acid (endocis-bicyclo[2,2,1]hept-5-ene-2,3-dicarboxylic acid).

Examples of the derivative of the unsaturated carboxylic acid can include an acid halide compound, an amide compound, an imide compound, an acid anhydride and an ester compound of the unsaturated carboxylic acid. Specific examples include maleic chloride, maleimide, maleic anhydride, citraconic anhydride, monomethyl maleate, dimethyl maleate and glycidyl maleate.

In particular, the unsaturated dicarboxylic acid and acid anhydride thereof are more preferable, and maleic acid, nadic acid and acid anhydrides thereof are particularly preferably used.

The position at which the vinyl compound having a polar group or the derivative thereof is grafted to the ethylene/α-olefin copolymer (r) is not particularly limited, and the unsaturated carboxylic acid or the derivative thereof may be bonded to any carbon atom of the ethylene/α-olefin copolymer (B) obtained by modification.

### [Ethylene/α-olefin copolymer (C)]

The ethylene/α-olefin copolymer (C) for use in the present invention satisfies the following requirements (c-1) to (c-3).

The ethylene/α-olefin copolymer (C) may be used singly or in combinations of two or more kinds thereof.

(c-1) Having a Brookfield viscosity (BF viscosity) at 150°C of 1 to 5000 mPa·s.

The ethylene/α-olefin copolymer (C) has a BF viscosity at 150°C of in a range from 1 to 5000 mPa·s, preferably in a range from 5 to 2500 mPa·s, more preferably in a range from 10 to 1000 mPa·s. When the BF viscosity at 150°C of the ethylene/α-olefin copolymer is less than the lower limit value, bleed-out resistance, impact strength and rigidity may be deteriorated, and on the other hand, when the BF viscosity at 150°C of the ethylene/α-olefin copolymer (C) is more than the upper limit value, an excessively increased viscosity may cause a reduction in fluidity during molding and deterioration in surface appearance. In other words, when the BF viscosity at 150°C of the ethylene/α-olefin copolymer (C) is in the above numerical value range, a composition excellent in balance among surface appearance, bleed-out resistance, impact strength, rigidity, and fluidity during molding can be provided.

(c-2) Being a modified copolymer to which a substituent other than a saturated hydrocarbon is imparted, and having a content M_{c} of the substituent imparted being 0.1 to 20 mass%.

The ethylene/α-olefin copolymer (C) for use in the present invention is a modified copolymer in which a substituent other than a saturated hydrocarbon group is imparted to an ethylene/α-olefin copolymer(s), preferably a modified copolymer in which the copolymer(s) is modified by one or more compounds selected from a compound having a substituent other than a saturated hydrocarbon group and having a carbon-carbon unsaturated bond, more preferably a modified copolymer in which the copolymer(s) is modified by one or more selected from unsaturated carboxylic acid and a derivative thereof.

The graft position of the substituent is not particularly limited.

In the case of modification by one or more compounds selected from a compound having a substituent other than a saturated hydrocarbon group and having a carbon-carbon unsaturated bond, examples of the substituent other than a saturated hydrocarbon group include substituents having an aromatic ring and/or a heteroaromatic ring such as a benzene ring, a naphthalene ring, a pyridine ring or a thiophene ring, oxygen-containing groups such as a carboxy group, an acid anhydride group, an ether bond, an ester bond, a hydroxy group and an epoxy group, nitrogen-containing groups such as an amide group, an imide bond, an amino group, a nitrile group and an isocyanate group, sulfur-containing groups such as a sulfinyl group, a sulfanyl group and a sulfonyl group, and silicon-containing groups such as a trialkylsilyl group and a trialkoxysilyl group.

Examples of the compound having a substituent other than a saturated hydrocarbon group and having a carbon-carbon unsaturated bond in the present invention include compounds having an aromatic ring, such as styrene and allylbenzene, compounds having an acid or acid-induced group, such as acid, acid anhydride, ester, amide and imide, compounds having an oxygen-containing group, such as alcohol, epoxy and ether, compounds having a nitrogen-containing group, such as amine, nitrile and isocyanate, compounds having a sulfur-containing group, such as sulfide, sulfoxide, sulfone and sulfonamide, and compounds having a silicon-containing group, such as vinylsilane. In particular, a compound having an aromatic ring, a compound having an acid or acid-induced group and a compound having an oxygen-containing group are preferable, a compound having an acid or acid-induced group and a compound having an oxygen-containing group are more preferable, and unsaturated carboxylic acid and a derivative thereof are further preferable.

Examples of the unsaturated carboxylic acid include (meth)acrylic acid, maleic acid, fumaric acid, tetrahydrophthalic acid, itaconic acid, citraconic acid, crotonic acid, isocrotonic acid and nadic acid (endocis-bicyclo[2,2,1]hept-5-ene-2,3-dicarboxylic acid).

Examples of the derivative of the unsaturated carboxylic acid include acid anhydride, ester, amide and imide of the unsaturated carboxylic acid.

Examples of the ester of the unsaturated carboxylic acid include esters and half esters, such as methyl (meth)acrylate, ethyl (meth)acrylate, maleic acid monoethyl ester, maleic acid diethyl ester, fumaric acid monomethyl ester, fumaric acid dimethyl ester, itaconic acid monomethyl ester and itaconic acid diethyl ester.

Examples of the unsaturated carboxylic acid amides include (meth)acrylamides, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N-monobutylamide and fumaric acid-N,N-dibutylamide.

Examples of the unsaturated carboxylic acid imides include maleimide, N-butylmaleimide and N-phenylmaleimide.

Among those unsaturated carboxylic acids and derivatives thereof mentioned above, unsaturated dicarboxylic acids and derivatives thereof are more preferable, and, in particular, maleic acid and maleic anhydride are particularly preferable with the result that, for example, a by-product such as a homopolymer is hardly generated in a reaction for production of the modified copolymer.

Examples of the modification method include a method including reacting with reactive gas or liquid, in addition to the above.

Examples of the reactive gas or liquid include air, oxygen, ozone, chlorine, bromine, sulfur dioxide and sulfuryl chloride, and one or more thereof can be used. In particular, an oxidation reaction using air and/or oxygen, chlorination with chlorine, and respective chlorosulfonation reactions using sulfuryl chloride, chlorine and sulfur dioxide, chlorine and sulfuryl chloride, and chlorine, sulfur dioxide and sulfuryl chloride are preferable. The gas for use in the present method may be diluted with an inert gas such as nitrogen, argon or carbon dioxide to any concentration, and then used.

The amount of modification M_{C} is 0.1 to 20 mass%, preferably 0.5 to 15 mass%. When the amount of modification M_{C} is in the above range, appropriate compatibility with the polyamide (A) and the ethylene/α-olefin copolymer (B) is achieved, and a polyamide composition excellent in balance between fluidity during molding and, for example, surface appearance, bleed-out resistance, impact resistance and rigidity in the form of a molded article can be provided.

(c-3) Including 30 to 80 mol% of a backbone unit derived from ethylene and 20 to 70 mol% of a backbone unit derived from a C3-C20 α-olefin (provided that the total amount of the backbone unit derived from ethylene and the backbone unit derived from a C3-C20 α-olefin is 100 mol%).

Typical examples of the C3-C20 α-olefin can include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene and 1-eicosene. The α-olefin may be used singly or in combinations of two or more kinds thereof.

Among these α-olefins, a C3-C10 α-olefin is preferable and propylene is particularly preferable, in terms of availability thereof.

The ethylene/α-olefin copolymer (C) for use in the present invention has preferably 40 to 75 mol%, more preferably 40 to 60 mol% of the backbone unit derived from ethylene, and preferably 25 to 60 mol%, more preferably 40 to 60 mol% of the backbone unit derived from the α-olefin. A too high or too low ethylene content may increase crystallinity to hardly allow for mixing with the polyamide (A), resulting in a reduction in fluidity.

The ethylene content in the ethylene/α-olefin copolymer (C) can be measured by a ¹³C-NMR method, and each peak can be identified and quantitated by, for example, a method described below and a method described in "Kobunshi Bunseki Handbook (Polymer Analysis Handbook)" (published from Asakura Publishing Co., Ltd., pp. 163-170).

(c-4) Having No observed melting point in a temperature range from -100°C to 150°C as measured in differential scanning calorimetry (DSC).

The ethylene/α-olefin copolymer (C) for use in the present invention preferably has no observed melting point in differential scanning calorimetry (DSC). The phrase no observed melting point (Tm) means that the heat of fusion (ΔH) (unit: J/g) measured by differential scanning calorimetry (DSC) is not substantially measured. The phrase heat of fusion (ΔH) is not substantially measured means that no peaks are observed in measurement with a differential scanning calorimeter (DSC) or the heat of fusion measured is 1 J/g or less. The melting point (Tm) and the heat of fusion (ΔH) of the ethylene/α-olefin polymer are determined by analyzing a DSC curve obtained by cooling to -100°C and then temperature rise to 150°C at a rate of temperature rise of 10°C/min in measurement with a differential scanning calorimeter (DSC), with reference to JIS K7121. No observation of any melting point is preferable in that mixing with the polyamide (A) is facilitated.

(c-5) Having a weight average molecular weight (Mw) determined by gel permeation chromatography (GPC) of in a range from 1,000 to 50,000.

The ethylene/α-olefin copolymer (C) for use in the present invention has the Mw of 1,000 to 50,000, preferably 1,000 to 40,000, more preferably 1,500 to 30,000. When the Mw is equal to or less than the lower limit, bleed-out resistance, impact resistance and rigidity may be deteriorated, and when the Mw is equal to or more than the upper limit, surface appearance and fluidity during molding may be deteriorated. In other words, by the Mw being in the above range, a polyamide composition can be provided which is excellent in balance between fluidity during molding and, for example, surface appearance, bleed-out resistance, impact resistance and rigidity in the form of a molded article.

The molecular weight distribution (Mw/Mn) of the ethylene/α-olefin copolymer (C) is not particularly limited, and is usually 3 or less, preferably 2.7 or less, further preferably 2.5 or less.

The Mw and the Mw/Mn of the ethylene/α-olefin copolymer (C) can be measured by GPC calibrated with standards (monodispersed polystyrene) having known molecular weights, and can be measured specifically by a method described in Examples later.

The ethylene/α-olefin copolymer (C) for use in the present invention preferably satisfies the following requirement (c-6), in addition to the above requirements (c-1) to (c-5).

(c-6) Having a density D_{C} of the ethylene/α-olefin copolymer (C) as measured according to JIS K2249 being 820 to 910 kg/m³, and having a difference |D_{B}-D_{C}| of the density D_{C} from a density D_{B} of the ethylene/α-olefin copolymer (B) as measured according to ASTM D1505 being 50 kg/m³ or less.

The density D_{C} is 820 to 910 kg/m³, preferably 830 to 900 kg/m³.

The difference |D_{B}-D_{C}| between the density D_{C} and the density D_{B} of the ethylene/α-olefin copolymer (B) is preferably 50 kg/m³ or less, more preferably 40 kg/m³ or less. The present inventors assume that the copolymer (B) forms a dispersion phase in the polyamide (A) in the polyamide composition of the present invention and a molded article obtained therefrom. The present inventors assume that, by the difference between the density D_{C} and the density D_{B} being in the above range, the copolymer (B) and the copolymer (C) are easily compatible with each other, and hence the effect of enhancement in fluidity of the copolymer (B) due to the copolymer (C) is exerted during melt kneading, to result in an enhancement in dispersibility of the copolymer (B). The present inventors assume that, consequently, the balance between fluidity during molding, and surface appearance, bleed-out resistance, impact resistance and rigidity in the form of a molded article is easily achieved.

The ethylene/α-olefin copolymer (C) preferably satisfies the following requirement (c-7), in addition to the above requirements (c-1) to (c-5) and (c-6).

(c-7) Having an acid value of 0.1 to 200 mgKOH/g.

The ethylene/α-olefin copolymer (C) has an acid value of 0.1 to 200 mgKOH/g, preferably 1 to 180 mgKOH/g, more preferably 5 to 150 mgKOH/g, further preferably 10 to 120 mgKOH/g.

In the case where the ethylene/α-olefin copolymer (C) is a modified product modified by a compound having an acid or acid-induced group, the acid value is used as an index of the amount of graft. A modified copolymer having an acid value in the above range has an appropriate degree of modification M_{C}, and has appropriate compatibility with the polyamide (A) and the ethylene/α-olefin copolymer (B) and can provide a polyamide composition excellent in balance between fluidity during molding and, for example, surface appearance, bleed-out resistance, impact resistance and rigidity in the form of a molded article.

The acid value of the modified product represents the number of milligrams of potassium hydroxide necessary for neutralization of an acid included in 1 g of the modified product, and can be measured by a method according to JIS K2501:2003. Specifically, the acid value is as described in Examples.

### [Method for producing ethylene/α-olefin copolymer (C)]

The copolymer (C) for use in the present invention is a modified product, and can be obtained by modifying an ethylene/α-olefin copolymer(s).

The method for producing the ethylene/α-olefin copolymer(s) is not particularly limited, and the copolymer can be produced by a known method. Examples include a method including copolymerizing ethylene and α-olefin in the presence of a catalyst including a compound containing a transition metal such as vanadium, zirconium, titanium or hafnium and an organoaluminum compound (encompassing an organoaluminum oxy compound) and/or an ionized ionic compound. Examples of such a method include methods described in, for example, WO2000/34420, JP S62-121710A, WO2004/29062, JP2004-175707A, and WO2001/27124. In particular, a method using a catalyst system including a metallocene compound such as zirconocene and an organoaluminum oxy compound (aluminoxane) is preferable because not only a copolymer can be produced at high polymerization activity, but also a chlorine content in a copolymer obtained and the amount of a 1,1' or 2,2'- bond (inversion) in an α-olefin monomer can be reduced.

An ethylene/α-olefin copolymer(s) favorable in balance performance among, for example, molecular weight control, molecular weight distribution and non-crystallinity is obtained particularly by using the following method.

The ethylene/α-olefin copolymer(s) in the present invention can be produced by copolymerizing ethylene and a C3-C20 α-olefin in the presence of an olefin polymerization catalyst including a bridged metallocene compound (P) represented by the following general formula [I], and at least one compound (Q) selected from the group consisting of an organometal compound (Q-1), an organoaluminum oxy compound (Q-2), and a compound (Q-3) that reacts with the bridged metallocene compound (P) to form an ion pair.

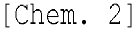

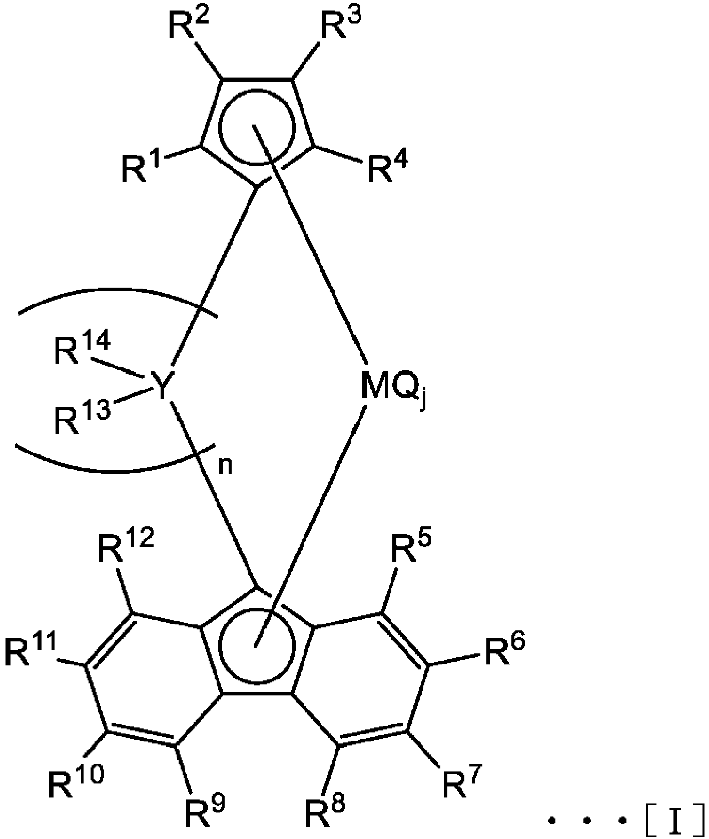

### [Bridged metallocene compound (P)]

The bridged metallocene compound (P) is represented by the formula [I]. Y, M, R¹ to R¹⁴, Q, n and j in the formula [I] are described below.

### (Y, M, R¹ to R¹⁴, Q, n and j)

Y is a Group XIV atom, is, for example, a carbon atom, a silicon atom, a germanium atom or a tin atom, and is preferably a carbon atom or a silicon atom, more preferably a carbon atom.

M is a titanium atom, a zirconium atom or a hafnium atom, preferably a zirconium atom.

R¹ to R¹² are each an atom or a substituent selected from the group consisting of a hydrogen atom, a C1-C20 hydrocarbon group, a silicon-containing group, a nitrogen-containing group, an oxygen-containing group, a halogen atom and a halogen-containing group, and may be the same as or different from one another. Adjacent substituents in R¹ to R¹² may be bonded to each other to form a ring, or may not be bonded to each other.

Examples of the C1-C20 hydrocarbon group include C1-C20 alkyl groups, C3-C20 cyclic saturated hydrocarbon groups, C2-C20 linear unsaturated hydrocarbon groups, C3-C20 cyclic unsaturated hydrocarbon groups, C1-C20 alkylene groups and C6-C20 arylene groups.

Examples of the C1-C20 alkyl groups include straight saturated hydrocarbon groups such as a methyl group, an ethyl group, an n-propyl group, an allyl group, an n-butyl group, an n-pentyl group, an n-hexyl group, an n-heptyl group, an n-octyl group, an n-nonyl group and an n-decanyl group, and branched saturated hydrocarbon groups such as an isopropyl group, an isobutyl group, a s-butyl group, a t-butyl group, a t-amyl group, a neopentyl group, a 3-methylpentyl group, a 1,1-diethylpropyl group, a 1,1-dimethylbutyl group, a 1-methyl-1-propylbutyl group, a 1,1-propylbutyl group, a 1,1-dimethyl-2-methylpropyl group, a 1-methyl-1-isopropyl-2-methylpropyl group and a cyclopropylmethyl group. The number of carbon atoms in such an alkyl group is preferably 1 to 6.

Examples of the C3-C20 cyclic saturated hydrocarbon groups include cyclic saturated hydrocarbon groups such as a cyclopropyl group, a cyclobutyl group, a cyclopentyl group, a cyclohexyl group, a cycloheptyl group, a cyclooctyl group, a norbornenyl group, a 1-adamantyl group and a 2-adamantyl group, and cyclic saturated hydrocarbon groups in which any hydrogen atom is replaced with a C1-C17 hydrocarbon group, such as a 3-methylcyclopentyl group, a 3-methylcyclohexyl group, a 4-methylcyclohexyl group, a 4-cyclohexylcyclohexyl group and a 4-phenylcyclohexyl group. The number of carbon atoms in such a cyclic saturated hydrocarbon group is preferably 5 to 11.

Examples of the C2-C20 linear unsaturated hydrocarbon groups include alkenyl groups such as an ethenyl group (vinyl group), a 1-propenyl group, a 2-propenyl group (allyl group) and a 1-methylethenyl group (isopropenyl group), and alkynyl groups such as an ethynyl group, a 1-propynyl group and a 2-propynyl group (propargyl group). The number of carbon atoms in such a linear unsaturated hydrocarbon group is preferably 2 to 4.

Examples of the C3-C20 cyclic unsaturated hydrocarbon groups include cyclic unsaturated hydrocarbon groups such as a cyclopentadienyl group, a norbornyl group, a phenyl group, a naphthyl group, an indenyl group, an azulenyl group, a phenanthryl group and an anthracenyl group, cyclic unsaturated hydrocarbon groups in which any hydrogen atom is replaced with a C1-C15 hydrocarbon group, such as a 3-methylphenyl group (m-tolyl group), a 4-methylphenyl group (p-tolyl group), a 4-ethylphenyl group, a 4-t-butylphenyl group, a 4-cyclohexylphenyl group, a biphenylyl group, a 3,4-dimethylphenyl group, a 3,5-dimethylphenyl group and a 2,4,6-trimethylphenyl group (mesityl group), and straight hydrocarbon groups or branched saturated hydrocarbon groups in which any hydrogen atom is replaced with a C3-C19 cyclic saturated hydrocarbon group or cyclic unsaturated hydrocarbon group, such as a benzyl group and a cumyl group. The number of carbon atoms in such a cyclic unsaturated hydrocarbon group is preferably 6 to 10.

Examples of the C1-C20 alkylene groups include a methylene group, an ethylene group, a dimethylmethylene group (isopropylidene group), an ethylmethylene group, a methylethylene group and an n-propylene group. The number of carbon atoms in such an alkylene group is preferably 1 to 6.

Examples of the C6-C20 arylene groups include an o-phenylene group, a m-phenylene group, a p-phenylene group and a 4,4'-biphenylylene group. The number of carbon atoms in such an arylene group is preferably 6 to 12.

Examples of the silicon-containing group include C1-C20 hydrocarbon groups in which any carbon atom is replaced with a silicon atom, for example, alkylsilyl groups such as a trimethylsilyl group, a triethylsilyl group, a t-butyldimethylsilyl group and a triisopropylsilyl group, arylsilyl groups such as a dimethylphenylsilyl group, a methyldiphenylsilyl group and a t-butyldiphenylsilyl group, and a pentamethyldisilanyl group and a trimethylsilylmethyl group. The number of carbon atoms in such an alkylsilyl group is preferably 1 to 10, and the number of carbon atoms in such an arylsilyl group is preferably 6 to 18.

Examples of the nitrogen-containing group include an amino group, and the above C1-C20 hydrocarbon groups or silicon-containing groups, in which a =CH- structural unit is replaced with a nitrogen atom, a -CH₂- structural unit is replaced with a nitrogen atom to which such a C1-C20 hydrocarbon group is bonded, or a -CH₃ structural unit is replaced with a nitrogen atom or a nitrile group to which such a C1-C20 hydrocarbon group is bonded, such as a dimethylamino group, a diethylamino group, an N-morpholinyl group, a dimethylaminomethyl group, a cyano group, a pyrrolidinyl group, a piperidinyl group and a pyridinyl group, and an N-morpholinyl group and a nitro group. The nitrogen-containing group is preferably a dimethylamino group, or an N-morpholinyl group.

Examples of the oxygen-containing group include a hydroxyl group, the above C1-C20 hydrocarbon groups, silicon-containing groups or nitrogen-containing groups, in which a - CH₂- structural unit is replaced with an oxygen atom or a carbonyl group or a -CH₃ structural unit is replaced with an oxygen atom to which such a C1-C20 hydrocarbon group is bonded, such as a methoxy group, an ethoxy group, a t-butoxy group, a phenoxy group, a trimethylsiloxy group, a methoxyethoxy group, a hydroxymethyl group, a methoxymethyl group, an ethoxymethyl group, a t-butoxymethyl group, a 1-hydroxyethyl group, a 1-methoxyethyl group, a 1-ethoxyethyl group, a 2-hydroxyethyl group, a 2-methoxyethyl group, a 2-ethoxyethyl group, an n-2-oxabutylene group, an n-2-oxapentylene group, an n-3-oxapentylene group, an aldehyde group, an acetyl group, a propionyl group, a benzoyl group, a trimethylsilylcarbonyl group, a carbamoyl group, a methylaminocarbonyl group, a carboxy group, a methoxycarbonyl group, a carboxymethyl group, an ethocarboxymethyl group, a carbamoylmethyl group, a furanyl group and a pyranyl group. The oxygen-containing group is preferably a methoxy group.

Examples of the halogen atom include Group XVII atoms such as fluorine, chlorine, bromine and iodine.

Examples of the halogen-containing group include the above C1-C20 hydrocarbon groups, silicon-containing groups, nitrogen-containing groups or oxygen-containing groups, in which any hydrogen atom is substituted with a halogen atom, such as a trifluoromethyl group, a tribromomethyl group, a pentafluoroethyl group and a pentafluorophenyl group.

Q is selected as a combination of the same or different members of a halogen atom, a C1-C20 hydrocarbon group, an anion ligand, and a neutral ligand capable of coordinating to a lone electron pair.

The details of the halogen atom and the C1-C20 hydrocarbon group are as described above. When Q is the halogen atom, Q is preferably a chlorine atom. When Q is the C1-C20 hydrocarbon group, the number of carbon atoms in the hydrocarbon group is preferably 1 to 7.

Examples of the anion ligand can include alkoxy groups such as a methoxy group, a t-butoxy group and a phenoxy group, carboxylate groups such as acetate and benzoate, and sulfonate groups such as methylate and tosylate.

Examples of the neutral ligand capable of coordinating to a lone electron pair can include phosphororganic compounds such as trimethylphosphine, triethylphosphine, triphenylphosphine and diphenylmethylphosphine, and ether compounds such as tetrahydrofuran, diethyl ether, dioxane and 1,2-dimethoxyethane.

j is an integer of 1 to 4, preferably 2.

n is an integer of 1 to 4, preferably 1 or 2, further preferably 1.

R¹³ and R¹⁴ are each an atom or a substituent selected from the group consisting of a hydrogen atom, a C1-C20 hydrocarbon group, an aryl group, a substituted aryl group, a silicon-containing group, a nitrogen-containing group, an oxygen-containing group, a halogen atom and a halogen-containing group, and may be the same as or different from each other. R¹³ and R¹⁴ may be bonded to each other to form a ring, or may not be bonded to each other.

The details of the C1-C20 hydrocarbon group, the silicon-containing group, the nitrogen-containing group, the oxygen-containing group, the halogen atom and the halogen-containing group are as described above.

Examples of the aryl group are partially overlapped with examples of the C3-C20 cyclic unsaturated hydrocarbon groups, and can include aromatic compound-derived substituents such as a phenyl group, a 1-naphthyl group, a 2-naphthyl group, an anthracenyl group, a phenanthrenyl group, a tetracenyl group, a chrysenyl group, a pyrenyl group, an indenyl group, an azulenyl group, a pyrrolyl group, a pyridyl group, a furanyl group and a thiophenyl group. The aryl group is preferably a phenyl group or a 2-naphthyl group.

Examples of the aromatic compound include aromatic hydrocarbon and heterocyclic aromatic compounds, such as benzene, naphthalene, anthracene, phenanthrene, tetracene, chrysene, pyrene, indene, azulene, pyrrole, pyridine, furan and thiophene.

Examples of such a substituted aryl group are partially overlapped with examples of the C3-C20 cyclic unsaturated hydrocarbon groups, and include groups, in which one or more hydrogen atoms in the aryl group are each substituted with at least one substituent selected from a C1-C20 hydrocarbon group, an aryl group, a silicon-containing group, a nitrogen-containing group, an oxygen-containing group, a halogen atom and a halogen-containing group, and specifically include a 3-methylphenyl group (m-tolyl group), a 4-methylphenyl group (p-tolyl group), a 3-ethylphenyl group, a 4-ethylphenyl group, a 3,4-dimethylphenyl group, a 3,5-dimethylphenyl group, a biphenylyl group, a 4-(trimethylsilyl)phenyl group, a 4-aminophenyl group, a 4-(dimethylamino)phenyl group, a 4-(diethylamino)phenyl group, a 4-morpholinylphenyl group, a 4-methoxyphenyl group, a 4-ethoxyphenyl group, a 4-phenoxyphenyl group, a 3,4-dimethoxyphenyl group, a 3,5-dimethoxyphenyl group, a 3-methyl-4-methoxyphenyl group, a 3,5-dimethyl-4-methoxyphenyl group, a 3-(trifluoromethyl)phenyl group, a 4-(trifluoromethyl)phenyl group, a 3-chlorophenyl group, a 4-chlorophenyl group, a 3-fluorophenyl group, a 4-fluorophenyl group, a 5-methylnaphthyl group and a 2-(6-methyl)pyridyl group.

In particular, a bridged metallocene compound (P) in which either or both of R¹³ and R¹⁴ is/are each independently an aryl group is preferable, and a bridged metallocene compound (P) in which both of R¹³ and R¹⁴ are each independently an aryl group is more preferable.

In particular, the bridged metallocene compound (P) in which both of R¹³ and R¹⁴ are each independently an aryl group is high in polymerization activity to copolymerization of ethylene and an α-olefin and the bridged metallocene compound (P) is used to thereby selectively stop polymerization by hydrogen introduction into a molecular terminal, and therefore the ethylene/α-olefin copolymer(s) obtained has few unsaturated bonds. Therefore, an ethylene/α-olefin copolymer(s) high in degree of saturation and excellent in heat resistance can be obtained by only performing a simpler hydrogenation operation or even without any hydrogenation operation, and is also excellent in terms of cost. An ethylene/α-olefin copolymer(s) obtained from the compound (P) is high in random copolymerization properties, and thus has a controlled molecular weight distribution.

In the bridged metallocene compound (P) represented by the formula [I], n is preferably 1. The bridged metallocene compound (hereinafter, also referred to as "bridged metallocene compound (P-1)".) is represented by the following general formula [II].

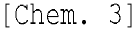

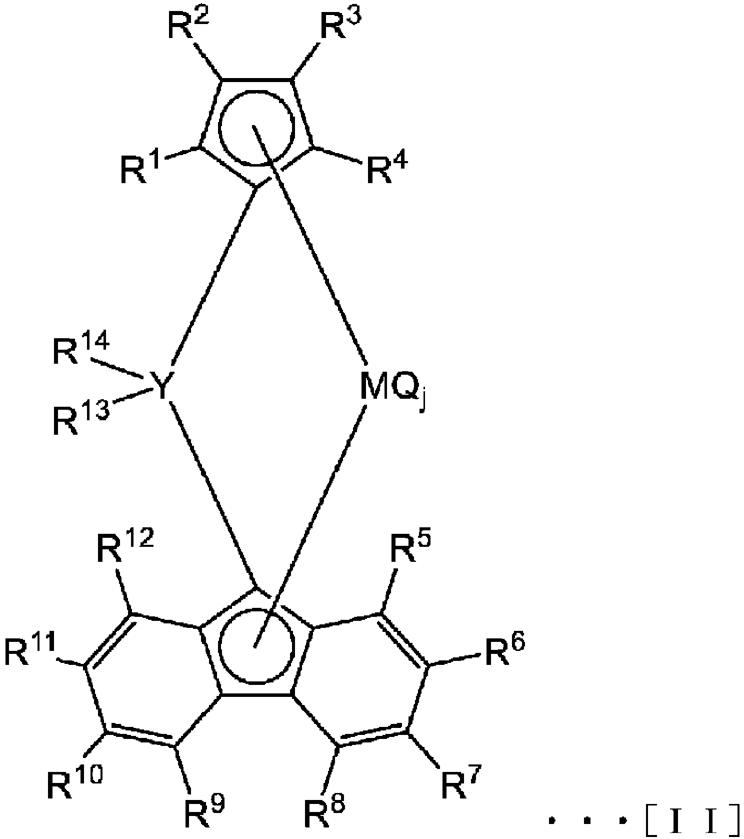

In the formula [II], the definitions of Y, M, R¹ to R¹⁴, Q and j are as described above.

The bridged metallocene compound (P-1) is obtained by a simplified production process and is reduced in production cost, as compared with a compound in which n in the formula [I] is an integer of 2 to 4, and an advantage thus obtained is that the production cost of the ethylene/α-olefin copolymer (C) is reduced by using the bridged metallocene compound (P-1).

In the bridged metallocene compound (P) represented by the general formula [I] and the bridged metallocene compound (P-1) represented by the general formula [II], M is further preferably a zirconium atom. A case where ethylene and one or more monomers selected from C3-C20 α-olefins are copolymerized in the presence of an olefin polymerization catalyst including the bridged metallocene compound in which M is a zirconium atom has advantages of high polymerization activity and a reduction in production cost of the ethylene/α-olefin copolymer(s), as compared with such a case where M is a titanium atom or a hafnium atom.

Examples of the bridged metallocene compound (P) include
[dimethylmethylene (η⁵-cyclopentadienyl) (η⁵-fluorenyl)]zirconium dichloride, [dimethylmethylene(η⁵-cyclopentadienyl) (η⁵-2, 7-di-t-butylfluorenyl)] zirconium dichloride, [dimethylmethylene(η⁵-cyclopentadienyl) (η⁵-3,6-dit-butylfluorenyl)]zirconium dichloride, [dimethylmethylene (η⁵-cyclopentadienyl) (η⁵-octamethyloctahydrodibenzofluorenyl)]zirconium dichloride, [dimethylmethylene (η⁵-cyclopentadienyl) (η⁵-tetramethyloctahydrodibenzofluorenyl)]zirconium dichloride,
[cyclohexylidene (η⁵-cyclopentadienyl) (η⁵-fluorenyl)]zirconium dichloride, [cyclohexylidene(η⁵-cyclopentadienyl) (η⁵-2,7-di-t-butylfluorenyl)] zirconium dichloride, [cyclohexylidene (η⁵-cyclopentadienyl) (η⁵-3, 6-di-t-butylfluorenyl)]zirconium dichloride, [cyclohexylidene(η⁵-cyclopentadienyl) (η⁵-octamethyloctahydrodibenzofluorenyl)]zirconium dichloride, [cyclohexylidene (η⁵-cyclopentadienyl) (η⁵-tetramethyloctahydrodibenzofluorenyl)]zirconium dichloride,
[diphenylmethylene (η⁵-cyclopentadienyl) (η⁵-fluorenyl)]zirconium dichloride, [diphenylmethylene(η⁵-cyclopentadienyl) (η⁵-2, 7-di-t-butylfluorenyl)] zirconium dichloride, [diphenylmethylene (η⁵-2-methyl-4-t-butylcyclopentadienyl) (η⁵-2, 7-di-t-butylfluorenyl)] zirconium dichloride, [diphenylmethylene (η⁵-cyclopentadienyl) (η⁵-3, 6-dit-butylfluorenyl)]zirconium dichloride, [diphenylmethylene (η⁵-cyclopentadienyl) (η⁵-octamethyloctahydrodibenzofluorenyl)]zirconium dichloride, [diphenylmethylene{η⁵-(2-methyl-4-i-propylcyclopentadienyl) } (η⁵-octamethyloctahydrodibenzofluorenyl)]zirconium dichloride, [diphenylmethylene (η⁵-cyclopentadienyl) (η⁵-tetramethyloctahydrodibenzofluorenyl)]zirconium dichloride,
[methylphenylmethylene (η⁵-cyclopentadienyl) (η⁵-fluorenyl)]zirconium dichloride, [methylphenylmethylene(η⁵-cyclopentadienyl) (η⁵-2, 7-di-t-butylfluorenyl)] zirconium dichloride, [methylphenylmethylene (η⁵-cyclopentadienyl) (η⁵-3,6-di-t-butylfluorenyl)]zirconium dichloride, [methylphenylmethylene (η⁵-cyclopentadienyl) (η⁵-octamethyloctahydrodibenzofluorenyl)]zirconium dichloride, [methylphenylmethylene (η⁵-cyclopentadienyl) (η⁵-tetramethyloctahydrodibenzofluorenyl)]zirconium dichloride,
[methyl (3-methylphenyl) methylene (η⁵-cyclopentadienyl) (η⁵-fluorenyl)]zirconium dichloride, [methyl(3-methylphenyl)methylene(η⁵-cyclopentadienyl)(η⁵-2,7-di-t-butylfluorenyl)]zirconium dichloride, [methyl(3-methylphenyl) methylene (η⁵-cyclopentadienyl) (η⁵-3, 6-di-t-butylfluorenyl)]zirconium dichloride, [methyl(3-methylphenyl) methylene (η⁵-cyclopentadienyl) (η⁵-octamethyloctahydrodibenzofluorenyl)]zirconium dichloride, [methyl (3-methylphenyl) methylene (η⁵-cyclopentadienyl) (η⁵-tetramethyloctahydrodibenzofluorenyl)]zirconium dichloride,
[methyl (4-methylphenyl) methylene (η⁵-cyclopentadienyl) (η⁵-fluorenyl)]zirconium dichloride, [methyl(4-methylphenyl)methylene(η⁵-cyclopentadienyl)(η⁵-2,7-di-t-butylfluorenyl)]zirconium dichloride, [methyl(4-methylphenyl) methylene (η⁵-cyclopentadienyl) (η⁵-3, 6-di-t-butylfluorenyl)]zirconium dichloride, [methyl(4-methylphenyl) methylene (η⁵-cyclopentadienyl) (η⁵-octamethyloctahydrodibenzofluorenyl)]zirconium dichloride, [methyl (4-methylphenyl)methylene (η⁵-cyclopentadienyl) (η⁵-tetramethyloctahydrodibenzofluorenyl)]zirconium dichloride,
[diphenylsilylene (η⁵-cyclopentadienyl) (η⁵-fluorenyl)]zirconium dichloride, [diphenylsilylene(η⁵-cyclopentadienyl) (η⁵-2,7-di-t-butylfluorenyl)] zirconium dichloride, [diphenylsilylene (η⁵-cyclopentadienyl) (η⁵-3, 6-di-t-butylfluorenyl)]zirconium dichloride, [diphenylsilylene(η⁵-cyclopentadienyl) (η⁵-octamethyloctahydrodibenzofluorenyl)]zirconium dichloride, [diphenylsilylene (η⁵-cyclopentadienyl) (η⁵-tetramethyloctahydrodibenzofluorenyl)]zirconium dichloride,
[bis (3-methylphenyl) silylene (η⁵-cyclopentadienyl) (η⁵-fluorenyl)]zirconium dichloride, [bis(3-methylphenyl) silylene (η⁵-cyclopentadienyl) (η⁵-2,7-di-t-butylfluorenyl)]zirconium dichloride, [bis(3-methylphenyl) silylene (η⁵-cyclopentadienyl) (η⁵-3, 6-di-t-butylfluorenyl)]zirconium dichloride, [bis(3-methylphenyl)silylene(η⁵-cyclopentadienyl)(η⁵-octamethyloctahydrodibenzofluorenyl)]zirconium dichloride, [bis(3-methylphenyl)silylene(η⁵-cyclopentadienyl)(η⁵-tetramethyloctahydrodibenzofluorenyl)]zirconium dichloride,
[dicyclohexylsilylene(η⁵-cyclopentadienyl)(η⁵-fluorenyl)]zirconium dichloride, [dicyclohexylsilylene(η⁵-cyclopentadienyl)(η⁵-2, 7-di-t-butylfluorenyl)] zirconium dichloride, [dicyclohexylsilylene(η⁵-cyclopentadienyl)(η⁵-3,6-di-t-butylfluorenyl)]zirconium dichloride, [dicyclohexylsilylene(η⁵-cyclopentadienyl)(η⁵-octamethyloctahydrodibenzofluorenyl)]zirconium dichloride, [dicyclohexylsilylene(η⁵-cyclopentadienyl)(η⁵-tetramethyloctahydrodibenzofluorenyl)]zirconium dichloride,
[ethylene(η⁵-cyclopentadienyl)(η⁵-fluorenyl)]zirconium dichloride, [ethylene(η⁵-cyclopentadienyl)(η⁵-2,7-di-t-butylfluorenyl)]zirconium dichloride, [ethylene(η⁵-cyclopentadienyl)(η⁵-3,6-di-t-butylfluorenyl)]zirconium dichloride, [ethylene(η⁵-cyclopentadienyl)(η⁵-octamethyloctahydrodibenzofluorenyl)]zirconium dichloride, [ethylene(η⁵-cyclopentadienyl)(η⁵-tetramethyloctahydrodibenzofluorenyl)]zirconium dichloride,
ethylene[η⁵-(3-tert-butyl-5-methylcyclopentadienyl)](η⁵-fluorenyl)zirconium dichloride, ethylene[η⁵-(3-tert-butyl-5-methylcyclopentadienyl)][η⁵-(3,6-di-tert-butylfluorenyl)]zirconium dichloride, ethylene[η⁵-(3-tert-butyl-5-methylcyclopentadienyl)][η⁵-(2,7-di-tert-butylfluorenyl)]zirconium dichloride, ethylene[η⁵-(3-tert-butyl-5-methylcyclopentadienyl)](octamethyloctahydrodibenzofluorenyl) zirconium dichloride, ethylene[η⁵-(3-tert-butyl-5-methylcyclopentadienyl)](benzofluorenyl)zirconium dichloride, ethylene[η⁵-(3-tert-butyl-5-methylcyclopentadienyl)] (dibenzofluorenyl)zirconium dichloride, ethylene[η⁵-(3-tert-butyl-5-methylcyclopentadienyl)] (octahydrodibenzofluorenyl)zirconium dichloride, ethylene[η⁵-(3-tert-butyl-5-methylcyclopentadienyl)][η⁵-(2,7-diphenyl-3,6-di-tert-butylfluorenyl)]zirconium dichloride, ethylene[η⁵-(3-tert-butyl-5-methylcyclopentadienyl)][η⁵-(2,7-dimethyl-3,6-di-tert-butylfluorenyl)]zirconium dichloride,
ethylene[η⁵-(3-tert-butylcyclopentadienyl)](η⁵-fluorenyl)zirconium dichloride, ethylene[η⁵-(3-tert-butylcyclopentadienyl)][η⁵-(3,6-di-tert-butylfluorenyl)]zirconium dichloride, ethylene[η⁵-(3-tert-butylcyclopentadienyl)][η⁵-(2,7-di-tert-butylfluorenyl)]zirconium dichloride, ethylene[η⁵-(3-tert-butylcyclopentadienyl)] (octamethyloctahydrodibenzofluorenyl)z irconium dichloride, ethylene[η⁵-(3-tert-butylcyclopentadienyl)](benzofluorenyl)zirconium dichloride, ethylene[n⁵-(3-tert-butylcyclopentadienyl)](dibenzofluorenyl)zirconium dichloride, ethylene[η⁵-(3-tert-butylcyclopentadienyl)](octahydrodibenzofluorenyl)zirconium dichloride, ethylene[η⁵-(3-tert-butylcyclopentadienyl)][η⁵-(2,7-diphenyl-3,6-di-tert-butylfluorenyl)]zirconium dichloride, ethylene[η⁵-(3-tert-butylcyclopentadienyl)][η⁵-(2,7-dimethyl-3,6-di-tert-butylfluorenyl)]zirconium dichloride,
ethylene [η⁵-(3-n-butylcyclopentadienyl)](η⁵-fluorenyl)zirconium dichloride, ethylene[η⁵-(3-n-butylcyclopentadienyl)][η⁵-(3,6-di-tert-butylfluorenyl)]zirconium dichloride, ethylene[η⁵-(3-n-butylcyclopentadienyl)][η⁵-(2,7-di-tert-butylfluorenyl)]zirconium dichloride, ethylene[η⁵-(3-n-butylcyclopentadienyl)] (octamethyloctahydrodibenzofluorenyl)z irconium dichloride, ethylene[η⁵-(3-n-butylcyclopentadienyl)](benzofluorenyl)zirconium dichloride, ethylene[η⁵-(3-n-butylcyclopentadienyl)] (dibenzofluorenyl)zirconium dichloride, ethylene[η⁵-(3-n-butylcyclopentadienyl)] (octahydrodibenzofluorenyl)zirconium dichloride, ethylene[η⁵-(3-n-butylcyclopentadienyl)][η⁵-(2,7-diphenyl-3,6-di-tert-butylfluorenyl)]zirconium dichloride, ethylene[η⁵-(3-n-butylcyclopentadienyl)][η⁵-(2,7-dimethyl-3,6-di-tert-butylfluorenyl)]zirconium dichloride,
diphenylmethylene[η⁵-(3-tert-butyl-5-methylcyclopentadienyl)](η⁵-fluorenyl)zirconium dichloride, diphenylmethylene[η⁵-(3-tert-butyl-5-methylcyclopentadienyl)][η⁵-(3,6-di-tert-butylfluorenyl)]zirconium dichloride, diphenylmethylene[η⁵-(3-tert-butyl-5-methylcyclopentadienyl)][η⁵-(2,7-di-tert-butylfluorenyl)]zirconium dichloride, diphenylmethylene[η⁵-(3-tert-butyl-5-methylcyclopentadienyl)] (octamethyloctahydrodibenzofluorenyl) zirconium dichloride, diphenylmethylene[η⁵-(3-tert-butyl-5-methylcyclopentadienyl)](benzofluorenyl)zirconium dichloride, diphenylmethylene[η⁵-(3-tert-butyl-5-methylcyclopentadienyl)] (dibenzofluorenyl)zirconium dichloride, diphenylmethylene[η⁵-(3-tert-butyl-5-methylcyclopentadienyl)] (octahydrodibenzofluorenyl)zirconium dichloride, diphenylmethylene[η⁵-(3-tert-butyl-5-methylcyclopentadienyl)][η⁵-(2,7-diphenyl-3,6-di-tert-butylfluorenyl)]zirconium dichloride, diphenylmethylene[η⁵-(3-tert-butyl-5-methylcyclopentadienyl)][η⁵-(2,7-dimethyl-3,6-di-tert-butylfluorenyl)]zirconium dichloride,
diphenylmethylene[η⁵-(3-tert-butylcyclopentadienyl)](η⁵-fluorenyl)zirconium dichloride, diphenylmethylene[η⁵-(3-tert-butylcyclopentadienyl)][η⁵-(3,6-di-tert-butylfluorenyl)]zirconium dichloride, diphenylmethylene[η⁵-(3-tert-butylcyclopentadienyl)][η⁵-(2,7-di-tert-butylfluorenyl)]zirconium dichloride, diphenylmethylene[η⁵-(3-tert-butylcyclopentadienyl)] (octamethyloctahydrodibenzofluorenyl)z irconium dichloride, diphenylmethylene[η⁵-(3-tert-butylcyclopentadienyl)](benzofluorenyl)zirconium dichloride, diphenylmethylene[η⁵-(3-tert-butylcyclopentadienyl)](dibenzofluorenyl)zirconium dichloride, diphenylmethylene[η⁵-(3-tert-butylcyclopentadienyl)] (octahydrodibenzofluorenyl)zirconium dichloride, diphenylmethylene[η⁵-(3-tert-butylcyclopentadienyl)][η⁵-(2,7-diphenyl-3,6-di-tert-butylfluorenyl)]zirconium dichloride, diphenylmethylene[η⁵-(3-tert-butylcyclopentadienyl)][η⁵-(2,7-dimethyl-3,6-di-tert-butylfluorenyl)]zirconium dichloride,
diphenylmethylene[η⁵-(3-n-butylcyclopentadienyl)](η⁵-fluorenyl)zirconium dichloride, diphenylmethylene[η⁵-(3-n-butylcyclopentadienyl)][η⁵-(3,6-di-tert-butylfluorenyl)]zirconium dichloride, diphenylmethylene[η⁵-(3-n-butylcyclopentadienyl)][η⁵-(2,7-di-tert-butylfluorenyl)]zirconium dichloride, diphenylmethylene[η⁵-(3-n-butylcyclopentadienyl)] (octamethyloctahydrodibenzofluorenyl)z irconium dichloride, diphenylmethylene[η⁵-(3-n-butylcyclopentadienyl)](benzofluorenyl)zirconium dichloride, diphenylmethylene[η⁵-(3-n-butylcyclopentadienyl)](dibenzofluorenyl)zirconium dichloride, diphenylmethylene[η⁵-(3-n-butylcyclopentadienyl)](octahydrodibenzofluorenyl)zirconium dichloride, diphenylmethylene[η⁵-(3-n-butylcyclopentadienyl)][η⁵-(2,7-diphenyl-3,6-di-tert-butylfluorenyl)]zirconium dichloride, diphenylmethylene[η⁵-(3-n-butylcyclopentadienyl)][η⁵-(2,7-dimethyl-3,6-di-tert-butylfluorenyl)]zirconium dichloride,
di(p-tolyl)methylene[η⁵-(3-tert-butyl-5-methylcyclopentadienyl)](η⁵-fluorenyl)zirconium dichloride, di(p-tolyl)methylene[η⁵-(3-tert-butyl-5-methylcyclopentadienyl)][η⁵-(3,6-di-tert-butylfluorenyl)]zirconium dichloride, di(p-tolyl)methylene[η⁵-(3-tert-butyl-5-methylcyclopentadienyl)][η⁵-(2,7-di-tert-butylfluorenyl)]zirconium dichloride, di(p-tolyl)methylene[η⁵-(3-tert-butyl-5-methylcyclopentadienyl)](octamethyloctahydrodibenzofluorenyl) zirconium dichloride, di(p-tolyl)methylene[η⁵-(3-tert-butyl-5-methylcyclopentadienyl)](benzofluorenyl)zirconium dichloride, di(p-tolyl)methylene[η⁵-(3-tert-butyl-5-methylcyclopentadienyl)] (dibenzofluorenyl)zirconium dichloride, di(p-tolyl)methylene[η⁵-(3-tert-butyl-5-methylcyclopentadienyl)](octahydrodibenzofluorenyl)zirconium dichloride, di(p-tolyl)methylene[η⁵-(3-tert-butyl-5-methylcyclopentadienyl)][η⁵-(2,7-diphenyl-3,6-di-tert-butylfluorenyl)]zirconium dichloride, di(p-tolyl)methylene[η⁵-(3-tert-butyl-5-methylcyclopentadienyl)][η⁵-(2,7-dimethyl-3,6-di-tert-butylfluorenyl)]zirconium dichloride,
di(p-tolyl)methylene[η⁵-(3-tert-butylcyclopentadienyl)](η⁵-fluorenyl)zirconium dichloride, di(p-tolyl)methylene[η⁵-(3-tert-butylcyclopentadienyl)][η⁵-(3,6-di-tert-butylfluorenyl)]zirconium dichloride, di(p-tolyl)methylene[η⁵-(3-tert-butylcyclopentadienyl)][η⁵-(2,7-di-tert-butylfluorenyl)]zirconium dichloride, di(p-tolyl)methylene[η⁵-(3-tert-butylcyclopentadienyl)] (octamethyloctahydrodibenzofluorenyl)z irconium dichloride, di(p-tolyl)methylene[η⁵-(3-tert-butylcyclopentadienyl)](benzofluorenyl)zirconium dichloride, di(p-tolyl)methylene[η⁵-(3-tert-butylcyclopentadienyl)](dibenzofluorenyl)zirconium dichloride, di(p-tolyl)methylene[η⁵-(3-tert-butylcyclopentadienyl)] (octahydrodibenzofluorenyl)zirconium dichloride, di(p-tolyl)methylene[n⁵-(3-tert-butylcyclopentadienyl)][η⁵-(2,7-diphenyl-3,6-di-tert-butylfluorenyl)]zirconium dichloride, di(p-tolyl)methylene[η⁵-(3-tert-butylcyclopentadienyl)][η⁵-(2,7-dimethyl-3,6-di-tert-butylfluorenyl)]zirconium dichloride,
di(p-tolyl)methylene[η⁵-(3-n-butylcyclopentadienyl)](η⁵-fluorenyl)zirconium dichloride, di(p-tolyl)methylene[η⁵-(3-n-butylcyclopentadienyl)][η⁵-(3,6-di-tert-butylfluorenyl)]zirconium dichloride, di(p-tolyl)methylene[η⁵-(3-n-butylcyclopentadienyl)][η⁵-(2,7-di-tert-butylfluorenyl)]zirconium dichloride, di(p-tolyl)methylene[η⁵-(3-n-butylcyclopentadienyl)](octamethyloctahydrodibenzofluorenyl)z irconium dichloride, di(p-tolyl)methylene[η⁵-(3-n-butylcyclopentadienyl)](benzofluorenyl)zirconium dichloride, di(p-tolyl)methylene[η⁵-(3-n-butylcyclopentadienyl)](dibenzofluorenyl)zirconium dichloride, di(p-tolyl)methylene[η⁵-(3-n-butylcyclopentadienyl)](octahydrodibenzofluorenyl)zirconium dichloride, di(p-tolyl)methylene[η⁵-(3-n-butylcyclopentadienyl)](2,7-diphenyl-3,6-di-tert-butylfluorenyl)zirconium dichloride, and di(p-tolyl)methylene[η⁵-(3-n-butylcyclopentadienyl)][η⁵-(2,7-dimethyl-3,6-di-tert-butylfluorenyl)]zirconium dichloride.

Examples of the bridged metallocene compound (P) further include the compound in which a zirconium atom is replaced with a hafnium atom or a titanium atom, and the compound in which a chloro ligand is replaced with a methyl group. Herein, η⁵-tetramethyloctahydrodibenzofluorenyl and η⁵-octamethyloctahydrodibenzofluorenyl, as constituent portions of the bridged metallocene compound (P) exemplified, respectively represent a 4,4,7,7-tetramethyl-(5a, 5b, 11a, 12, 12a-η⁵) -1, 2, 3, 4, 7, 8, 9, 10-octahydrodibenzo[b,H]fluorenyl group and a 1,1,4,4,7,7,10,10-octamethyl-(5a,5b,11a,12,12a-η⁵)-1,2,3,4,7,8,9,10-octahydrodibenzo[b,H]fluorenyl group.

The bridged metallocene compound (P) may be used singly or in combinations of two or more kinds thereof.

### [Compound (Q)]

The compound (Q) in the present invention is at least one compound selected from an organometal compound (Q-1), an organoaluminum oxy compound (Q-2), and a compound (Q-3) that reacts with the bridged metallocene compound (P) to form an ion pair.

The organometal compound (Q-1) here used is specifically any of organometal compounds (Q-1a), (Q-1b) and (Q-1c) as described below, including Groups 1 and 2 elements and Groups 12 and 13 elements in the periodic table.

(Q-1a) An organoaluminum compound represented by general formula R^{a}ₘAl(OR^{b})ₙHₚX_{q}:
wherein R^{a} and R^{b} may be the same as or different from each other and R^{a} and R^{b} each represent a C1-C15, preferably C1-C4 hydrocarbon group, X represents a halogen atom, m is a number of 0 < m ≤ 3, n is a number of 0 ≤ n < 3, p is a number of 0 ≤ p < 3, q is a number of 0 ≤ q < 3, and m + n + p + q = 3 is satisfied.

Examples of such a compound can include tri-n-alkylaluminum such as trimethylaluminum, triethylaluminum, tri-n-butylaluminum, tri-n-hexylaluminum and tri-n-octylaluminum, tri-branched alkylaluminum such as triisopropylaluminum, triisobutylaluminum, tri-sec-butylaluminum, tri-t-butylaluminum, tri-2-methylbutylaluminum, tri-3-methylhexylaluminum and tri-2-ethylhexylaluminum, tricycloalkylaluminum such as tricyclohexylaluminum and tricyclooctylaluminum, triarylaluminum such as triphenylaluminum and tri(4-methylphenyl)aluminum, dialkylaluminum hydrides such as diisopropylaluminum hydride and diisobutylaluminum hydride, alkenylaluminum represented by general formula (i-C₄H₉)ₓAl_{y}(C₅H₁₀)_{z} (wherein x, y and z are positive numbers and z ≤ 2× is satisfied.), such as isoprenylaluminum, alkylaluminum alkoxides such as isobutylaluminum methoxide and isobutylaluminum ethoxide, dialkylaluminum alkoxides such as dimethylaluminum methoxide, diethylaluminum ethoxide and dibutylaluminum butoxide, alkylaluminum sesquialkoxides such as ethylaluminum sesquiethoxide and butylaluminum sesquibutoxide, partially alkoxylated alkylaluminum having an average compositional ratio represented by, for example, general formula R^{a}_{2.5}Al(OR^{b})_{0.5}, alkylaluminum aryloxides such as diethylaluminum phenoxide and diethylaluminum(2,6-di-t-butyl-4-methylphenoxide), dialkylaluminum halides such as dimethylaluminum chloride, diethylaluminum chloride, dibutylaluminum chloride, diethylaluminum bromide and diisobutylaluminum chloride, alkylaluminum sesquihalides such as ethylaluminum sesquichloride, butylaluminum sesquichloride and ethylaluminum sesquibromide, partially halogenated alkylaluminum of, for example, alkylaluminum dihalides such as ethylaluminum dichloride, dialkylaluminum hydrides such as diethylaluminum hydride and dibutylaluminum hydride, alkylaluminum dihydrides such as ethylaluminum dihydride and propylaluminum dihydride and other partially hydrogenated alkylaluminum, and partially alkoxylated and halogenated alkylaluminum such as ethylaluminum ethoxychloride, butylaluminum butoxychloride and ethylaluminum methoxybromide. A compound similar to the compound represented by the general formula R^{a}ₘAl(OR^{b})ₙHₚX_{q} can also be used, and examples thereof can include an organoaluminum compound in which two or more aluminum compounds are bonded via a nitrogen atom. Specific examples of such a compound can include (C₂H₅)₂AlN(C₂H₅)Al(C₂H₅)₂.

(Q-1b) A complex alkylated compound represented by general formula M²AlR^{a}₄, including a Group I metal in the periodic table and aluminum: wherein M² represents Li, Na or K, and R^{a} represents a C1-C15, preferably C1-C4 hydrocarbon group.

Examples of such a compound can include LiAl(C₂H₅)₄ and LiAl(C₇H₁₅)₄.

(Q-1c) A dialkyl compound represented by general formula R^{a}R^{b}M³, including a Group II or Group XII metal in the periodic table: wherein R^{a} and R^{b} may be the same as or different from each other and R^{a} and R^{b} each represent a C1-C15, preferably C1-C4 hydrocarbon group, and M³ is Mg, Zn or Cd.

A conventionally known aluminoxane can be used as it is, as the organoaluminum oxy compound (Q-2). Specific examples can include a compound represented by the following general formula [III] and a compound represented by the following general formula [IV].

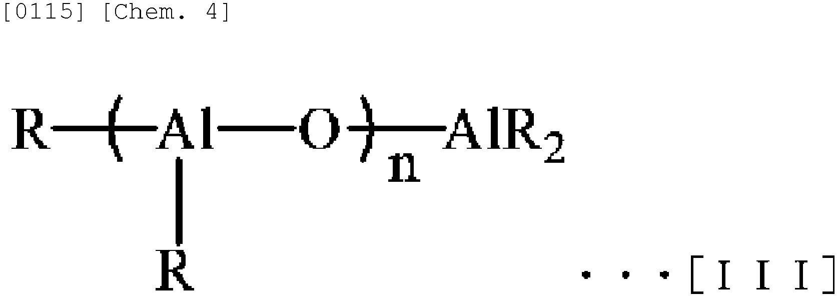

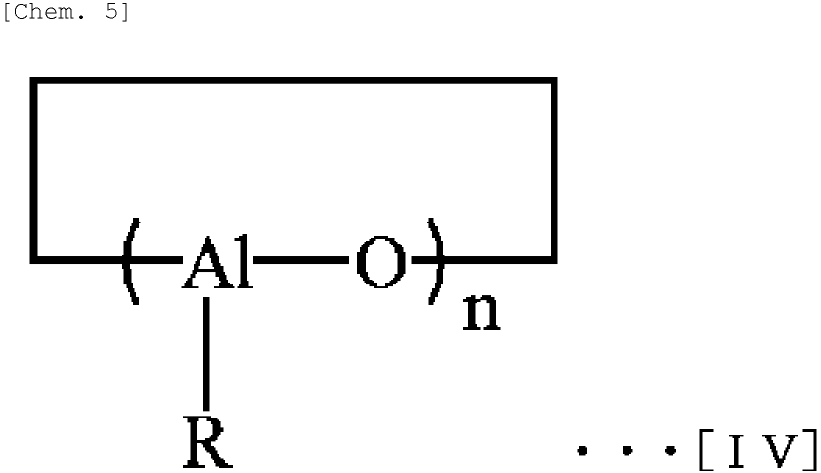

In the formulas [III] and [IV], R represents a C1-C10 hydrocarbon group, and n represents an integer of 2 or more.

In particular, methylaluminoxane is utilized in which R is a methyl group and n is 3 or more, preferably 10 or more. Such aluminoxanes may contain a small amount of an organoaluminum compound.

When copolymerization of ethylene and a C3 or higher α -olefin is performed at a high temperature in the present invention, a benzene-insoluble organoaluminum oxy compound exemplified in JP H2-78687A can also be applied. An organoaluminum oxy compound described in JP H2-167305A, or aluminoxane having two or more alkyl groups, described in JP H2-24701A and JP H3-103407A, can also be suitably utilized. The "benzene-insoluble organoaluminum oxy compound" that may be used in the present invention is a compound that usually contains 10% or less, preferably 5% or less, particularly preferably 2% or less of an Al component to be dissolved in benzene at 60°C, in terms of Al atom, and that is insoluble or hardly soluble in benzene.

Examples of the organoaluminum oxy compound (Q-2) can also include modified methylaluminoxane represented by the following general formula [V].

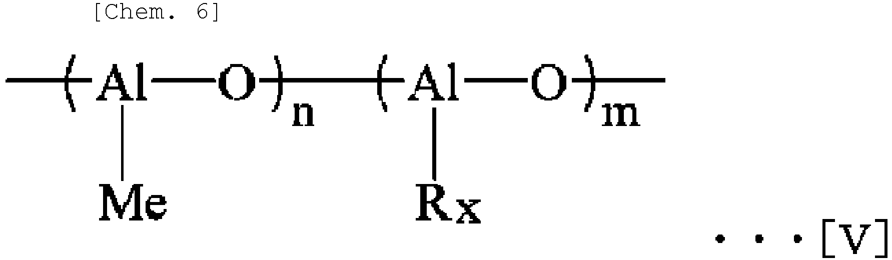

In the formula [V], R represents a C1-C10 hydrocarbon group, and m and n each independently represent an integer of 2 or more.

Methylaluminoxane as one example of the organoaluminum oxy compound (Q-2) is easily available and has high polymerization activity, and thus is commonly used as an activator in polyolefin polymerization. However, methylaluminoxane, which is hardly dissolved in a saturated hydrocarbon, has been thus used in the form of a solution in an environmentally undesirable aromatic hydrocarbon such as toluene or benzene. Therefore, a flexible body of methylaluminoxane represented by formula 4 has been recently developed and used as aluminoxane dissolved in a saturated hydrocarbon. Such modified methylaluminoxane represented by the formula [V] is prepared by using trimethylaluminum and alkylaluminum other than trimethylaluminum as described in, for example, US4960878B and US5041584B, and, for example, is prepared by using trimethylaluminum and triisobutylaluminum. Aluminoxane in which Rx is an isobutyl group is commercially available, in the form of a solution in a saturated hydrocarbon, under any of trade names MMAO and TMAO (see Tosoh Finechem Corporation, Tosoh Research & Technology Review, Vol 47, 55 (2003)).

Examples of the organoaluminum oxy compound (Q-2) can further include a boron-containing organoaluminum oxy compound represented by the following general formula [VI].

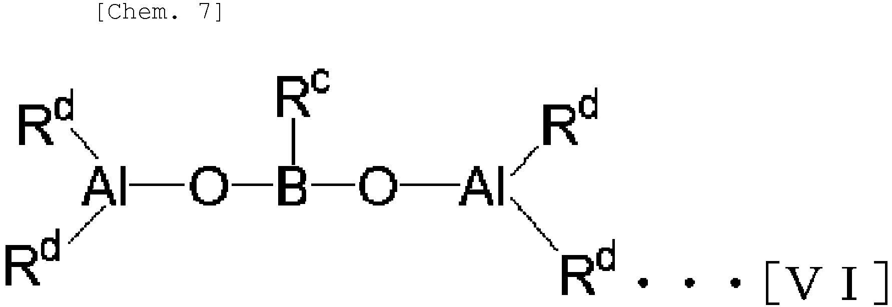

In the formula [VI], R^{c} represents a C1-C10 hydrocarbon group. R^{d}(s) may be the same as or different from one another, and R^{d}(s) each represent a hydrogen atom, a halogen atom or a C1-C10 hydrocarbon group.

Examples of the compound (Q-3) (hereinafter, sometimes abbreviated as "ionized ionic compound" or simply "ionic compound".) that reacts with the bridged metallocene compound (P) to form an ion pair can include Lewis acids, ionic compounds, borane compounds and carborane compounds described in, for example, JP H1-501950A, JP H1-502036A, JP H3-179005A, JP H3-179006A, JP H3-207703A, JP H3-207704A and US5321106B. Examples can further include heteropoly compounds and isopoly compounds.

The ionized ionic compound preferably used in the present invention is a boron compound represented by the following general formula [VII].

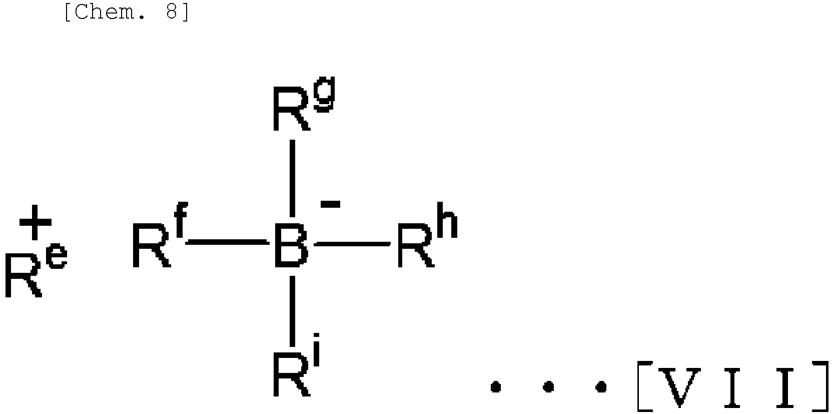

Examples of R^{e+} in the formula [VII] include H⁺, carbenium cation, oxonium cation, ammonium cation, phosphonium cation, cycloheptyltrienyl cation, and ferrocenium cation having a transition metal. R^{f} to Rⁱ may be the same as or different from one another, and R^{f} to Rⁱ are each a substituent selected from a C1-C20 hydrocarbon group, a silicon-containing group, a nitrogen-containing group, an oxygen-containing group, a halogen atom and a halogen-containing group, preferably a substituted aryl group.

Specific examples of the carbenium cation include tri-substituted carbenium cations such as triphenylcarbenium cation, tris(4-methylphenyl)carbenium cation and tris(3,5-dimethylphenyl)carbenium cation.

Specific examples of the ammonium cation include trialkyl-substituted ammonium cations such as trimethylammonium cation, triethylammonium cation, tri(n-propyl)ammonium cation, triisopropylammonium cation, tri(n-butyl)ammonium cation and triisobutylammonium cation, N,N-dialkylanilinium cations such as N,N-dimethylanilinium cation, N,N-diethylanilinium cation and N,N-2,4,6-pentamethylanilinium cation, and dialkylammonium cations such as diisopropylammonium cation and dicyclohexylammonium cation.

Specific examples of the phosphonium cation include triarylphosphonium cations such as triphenylphosphonium cation, tris(4-methylphenyl)phosphonium cation and tris(3,5-dimethylphenyl)phosphonium cation.

R^{e+}, among the above specific examples, is preferably, for example, the carbenium cation or the ammonium cation, particularly preferably triphenylcarbenium cation, N,N-dimethylanilinium cation or N,N-diethylanilinium cation.

Examples of the carbenium cation-containing compound as the ionized ionic compound preferably used in the present invention can include triphenylcarbenium tetraphenylborate, triphenylcarbenium tetrakis(pentafluorophenyl)borate, triphenylcarbenium tetrakis{3,5-di-(trifluoromethyl)phenyl}borate, tris(4-methylphenyl)carbenium tetrakis(pentafluorophenyl)borate and tris(3,5-dimethylphenyl)carbenium tetrakis(pentafluorophenyl)borate.

Examples of the trialkyl-substituted ammonium cation-containing compound as the ionized ionic compound preferably used in the present invention can include triethylammonium tetraphenylborate, tripropylammonium tetraphenylborate, tri(n-butyl)ammonium tetraphenylborate, trimethylammonium tetrakis(4-methylphenyl)borate, trimethylammonium tetrakis(2-methylphenyl)borate, tri(n-butyl)ammonium tetrakis(pentafluorophenyl)borate, triethylammonium tetrakis(pentafluorophenyl)borate, tripropylammonium tetrakis(pentafluorophenyl)borate, tripropylammonium tetrakis(2,4-dimethylphenyl)borate, tri(n-butyl)ammonium tetrakis(3,5-dimethylphenyl)borate, tri(n-butyl)ammonium tetrakis{4-(trifluoromethyl)phenyl}borate, tri(n-butyl)ammonium tetrakis{3,5-di(trifluoromethyl)phenyl}borate, tri(n-butyl)ammonium tetrakis(2-methylphenyl)borate, dioctadecylmethylammonium tetraphenylborate, dioctadecylmethylammonium tetrakis(4-methylphenyl)borate, dioctadecylmethylammonium tetrakis(4-methylphenyl)borate, dioctadecylmethylammonium tetrakis(pentafluorophenyl)borate, dioctadecylmethylammonium tetrakis(2,4-dimethylphenyl)borate, dioctadecylmethylammonium tetrakis(3,5-dimethylphenyl)borate, dioctadecylmethylammonium tetrakis{4-(trifluoromethyl)phenyl}borate, dioctadecylmethylammonium tetrakis{3,5-di(trifluoromethyl)phenyl}borate and dioctadecylmethylammonium.

Examples of the N,N-dialkylanilinium cation-containing compound as the ionized ionic compound preferably used in the present invention can include N,N-dimethylanilinium tetraphenylborate, N,N-dimethylanilinium tetrakis(pentafluorophenyl)borate, N,N-dimethylanilinium tetrakis{3,5-di(trifluoromethyl)phenyl}borate, N,N-diethylanilinium tetraphenylborate, N,N-diethylanilinium tetrakis(pentafluorophenyl)borate, N,N-diethylanilinium tetrakis{3,5-di(trifluoromethyl)phenyl}borate, N,N-2,4,6-pentamethylanilinium tetraphenylborate and N,N-2,4,6-pentamethylanilinium tetrakis(pentafluorophenyl)borate.

Examples of the dialkylammonium cation-containing compound as the ionized ionic compound preferably used in the present invention can include di-n-propylammonium tetrakis(pentafluorophenyl)borate and dicyclohexylammonium tetraphenylborate.

Other ionic compounds exemplified in JP2004-51676A can also be used without any limitation.

The ionic compound (Q-3) may be used singly or in combinations of two or more kinds thereof.

Examples of the configuration of the catalyst system include the following [1] to [4].
[1] The catalyst system includes the bridged metallocene compound (P) and the compound (Q-2).
[2] The catalyst system includes the bridged metallocene compound (P), the compound (Q-1) and the compound (Q-2).
[3] The catalyst system includes the bridged metallocene compound (P), the compound (Q-1) and the compound (Q-3).
[4] The catalyst system includes the bridged metallocene compound (P), the compound (Q-2) and the compound (Q-3).

The bridged metallocene compound (P), and the compounds (Q-1) to (Q-3) may be introduced into the reaction system in any order.

### [Carrier (R)]

A carrier (R) may be, if necessary, used as a constituent component of the olefin polymerization catalyst in the present invention.

The carrier (R) optionally used in the present invention is an inorganic or organic compound and is a granular or fine particulate solid. In particular, the inorganic compound is preferably porous oxide, inorganic chloride, clay, clay mineral or an ion-exchangeable layered compound.

The porous oxide here used can be specifically, for example, SiO₂, Al₂O₃, MgO, ZrO, TiO₂, B₂O₃, CaO, ZnO, BaO or ThO₂, or a composite or a mixture including such an oxide, for example, natural or synthetic zeolite, SiO₂-MgO, SiO₂-Al₂O₃, SiO₂-TiO₂, SiO₂-V₂O₅, SiO₂-Cr₂O₃ or SiO₂-TiO₂-MgO. In particular, one mainly containing SiO₂ and/or Al₂O₃ is preferable. Such porous oxide differs in properties depending on the type and the production method, and the carrier preferably used in the present invention has a particle size in a range from 0.5 to 300 µm, preferably 1.0 to 200 µm, a specific surface area in a range from 50 to 1000 m²/g, preferably 100 to 700 m²/g, and a pore volume in a range from 0.3 to 3.0 cm³/g. Such a carrier is, if necessary, fired at 100 to 1000°C, preferably 150 to 700°C, and then used.

The inorganic chloride used is, for example, MgCl₂, MgBr₂, MnCl₂ or MnBr₂. The inorganic chloride may be used as it is, or may be pulverized by a ball mill or a vibrating mill, and then used. Alternatively, the inorganic chloride, which is dissolved in a solvent such as an alcohol and then precipitated in the form of fine particles by a precipitating agent, may also be used.

Clay is usually constituted with clay mineral as a main component. The ion-exchangeable layered compound is a compound having a crystal structure in which surfaces configured are mutually stacked in parallel by a weak force with, for example, an ionic bond, and includes an exchangeable ion. Most clay mineral corresponds to such an ion-exchangeable layered compound. Such clay, clay mineral, and ion-exchangeable layered compound here used are not limited to natural products, and can also be artificially synthesized products. Examples of the clay, clay mineral or ion-exchangeable layered compound can include clay, clay mineral, and ionic crystalline compounds having a layered crystal structure, such as a hexagonal closest packing type, an antimony type, a CdCl₂ type and a CdI₂ type. Examples of such clay and clay mineral include kaolin, bentonite, kibushi clay, gairome clay, allophane, hisingerite, pyrophyllite, mica, montmorillonite, vermiculite, chlorite rocks, palygorskite, kaolinite, nacrite, dickite and halloysite, and examples of such an ion-exchangeable layered compound include crystalline acidic salts of polyvalent metals, such as α-Zr(HAsO₄)₂·H₂O, α-Zr(HPO₄)₂, α-Zr(KPO₄)₂·3H₂O, α-Ti(HPO₄)₂, α-Ti(HAsO₄)₂·H₂O, α-Sn(HPO₄)₂·H₂O, γ-Zr(HPO₄)₂, γ-Ti(HPO₄)₂ and γ-Ti(NH₄PO₄)₂·H₂O. The clay and the clay mineral for use in the present invention are also preferably subjected to a chemical treatment. The chemical treatment here used can be any treatment such as a surface treatment for removal of impurities attached to a surface, or a treatment having an effect on the crystal structure of the clay. Specific examples of the chemical treatment include an acid treatment, an alkali treatment, a salt treatment and an organic substance treatment.

The ion-exchangeable layered compound may be a layered compound where a space between layers is enlarged by exchanging an exchangeable ion in the space between layers with another large and bulky ion by means of ion exchangeability. Such a bulky ion serves as a shore supporting a layered structure, and is usually referred to as pillar. Such introduction of another substance (guest compound) into the space between layers in the layered compound is referred to as intercalation. Examples of the guest compound include cationic inorganic compounds such as TiCl₄ and ZrCl₄, metal alkoxides such as Ti(OR)₄, Zr(OR)₄, PO(OR)₃ and B(OR)₃ (R represents, for example, a hydrocarbon group), and metal hydroxide ions such as [Al₁₃O₄(OH)₂₄]⁷⁺, [Zr₄(OH)₁₄]²⁺ and [Fe₃O(OCOCH₃)₆]⁺. Such a compound may be used singly or in combinations of two or more kinds thereof. In intercalation of such a compound, for example, a polymerized product obtained by hydrolytic polycondensation of a metal alkoxide such as Si(OR)₄, Al(OR)₃ or Ge(OR)₄ (R represents, for example, a hydrocarbon group), or a colloidal inorganic compound such as SiO₂ can also co-exist. Examples of the pillar include oxide generated by intercalation of the metal hydroxide ion into the space between layers and then heating and dehydration.

In particular, the clay or the clay mineral is preferable, and montmorillonite, vermiculite, pectolite, tainiolite and synthetic mica are particularly preferable.

Examples of the organic compound as the carrier (R) can include a granular or fine particulate solid having a particle size in a range from 0.5 to 300 µm. Specific examples can include a (co)polymer generated with as a main component a C2-C14 α-olefin such as ethylene, propylene, 1-butene or 4-methyl-1-pentene, or a (co)polymer generated with vinylcyclohexane or styrene as a main component, and modified products thereof.

The usage method and the order of addition of each component of the polymerization catalyst can be arbitrarily selected. At least two or more components in the catalyst may be contacted with each other in advance.

The bridged metallocene compound (P) (hereinafter, also referred to as "component (P)".) is usually used in an amount of 10⁻⁹ to 10⁻¹ mol, preferably 10⁻⁸ to 10⁻² mol per liter of a reaction volume.

The organometal compound (Q-1) (hereinafter, also referred to as "component (b-1)".) is usually used in an amount so that the molar ratio [(Q-1)/M] of the component (Q-1) to a transition metal atom (M) in the component (P) is usually 0.01 to 50,000, preferably 0.05 to 10,000.

The organoaluminum oxy compound (Q-2) (hereinafter, also referred to as "component (Q-2)".) is used in an amount so that the molar ratio [(Q-2)/M] of the aluminum atom in the component (Q-2) to the transition metal atom (M) in the component (P) is usually 10 to 5,000, preferably 20 to 2,000.

The ionic compound (Q-3) (hereinafter, also referred to as "component (Q-3)".) is used in an amount so that the molar ratio [(Q-3)/M] of the component (Q-3) to the transition metal atom (M) in the component (P) is usually 1 to 10,000, preferably 1 to 5,000.

The polymerization temperature is usually -50°C to 300°C, preferably 30 to 250°C, more preferably 100°C to 250°C, further preferably 130°C to 200°C. As the temperature in the polymerization temperature region in the above range is higher, the solution viscosity during polymerization is lower and removal of heat of polymerization is also easier. The polymerization pressure is usually ordinary pressure to 10 MPa-gauge pressure (MPa-G), preferably ordinary pressure to 8 MPa-G.

The polymerization reaction can be carried out in any method of batchwise, semi-continuous, and continuous methods. Such polymerization can also be continuously carried out in two or more polymerization instruments different in reaction conditions.

The molecular weight of the resulting copolymer can be regulated by the changes in hydrogen concentration and polymerization temperature in a polymerization system. The molecular weight can also be regulated by the amount of the component (Q) used. In the case of addition of hydrogen, the amount of hydrogen added is properly about 0.001 to 5,000 NL per kg of the copolymer.

The polymerization solvent for use in a liquid phase polymerization method is usually an inert hydrocarbon solvent, and is preferably a saturated hydrocarbon having a boiling point of 50°C to 200°C under ordinary pressure. Specific examples of the polymerization solvent include aliphatic hydrocarbons such as propane, butane, pentane, hexane, heptane, octane, decane, dodecane and kerosene oil, and alicyclic hydrocarbons such as cyclopentane, cyclohexane and methylcyclopentane, and particularly preferably include hexane, heptane, octane, decane and cyclohexane. The α-olefin to be polymerized, by itself, can also be used as the polymerization solvent. While an aromatic hydrocarbon such as benzene, toluene or xylene, or a halogenated hydrocarbon such as ethylene chloride, chlorobenzene or dichloromethane can also be used as the polymerization solvent, use thereof is not preferable in terms of a reduction in load on the environment and in terms of minimization of the influence on human health.

The kinematic viscosity at 100°C of the olefin polymer depends on the molecular weight of the polymer. In other words, a high molecular weight leads to a high viscosity and a low molecular weight leads to a low viscosity, and thus the kinematic viscosity at 100°C is adjusted by the above molecular weight adjustment. A low molecular weight component in a polymer obtained can be removed by a conventionally known method such as distillation under reduced pressure, to thereby allow for adjustment of the molecular weight distribution (Mw/Mn) of the polymer obtained. The polymer obtained may be further subjected to hydrogen addition (hereinafter, also referred to as hydrogenation.) by a conventionally known method. If the number of double bonds in the polymer obtained by such hydrogenation is reduced, oxidation stability and heat resistance are enhanced.

The ethylene/α-olefin copolymer(s) obtained may be used singly, or two or more of such copolymers different in molecular weight or those different in compositional ratio of monomers may be combined.

The copolymer (C) for use in the present invention can be produced by modifying the ethylene/α-olefin copolymer(s) by any of various conventionally known methods, for example, the following method (1) or (2).
(1) a method of modifying the copolymer(s) in which the copolymer (s) is charged into, for example, an extruder or a batch reactor, and a vinyl compound and a reactive gas/liquid to be reacted are added thereto and modified.
(2) a method of modifying the copolymer(s) in which the copolymer(s) is dissolved into a solvent, and a vinyl compound and a reactive gas/liquid are added and modified.

In any of the above methods, the graft copolymerization is preferably carried out in the presence of, for example, one, or two or more radical initiators to ensure that the vinyl compound and/or the reactive gas/liquid will be graft copolymerized efficiently.

Examples of the radical initiators include organic peroxides and azo compounds.

Examples of the organic peroxides include benzoyl peroxide, dichlorobenzoyl peroxide, dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene. Examples of the azo compounds include azobisisobutyronitrile and dimethyl azoisobutyrate.

Among those described above, in particular, dialkyl peroxides such as dicumyl peroxide, di-tert-butyl peroxide, 2,5-dimethyl-2,5-di(tert-butylperoxy)-3-hexyne, 2,5-dimethyl-2,5-di(tert-butylperoxy)hexane and 1,4-bis(tert-butylperoxyisopropyl)benzene are preferably used.

The amount of the radical initiator used is usually 0.001 to 5 parts by mass, preferably 0.01 to 4 parts by mass, further preferably 0.05 to 3 parts by mass per 100 parts by mass of the copolymer(s) before modification.

Among those described above, modification by an oxidation reaction using air and/or oxygen may be made in the presence of one, or two or more selected from, for example, metals or metal salts, inorganic acids, and organic acids, in addition to the radical initiator, in order to promote the reaction.

Examples of the metals or metal salts include manganese acetate, cobalt acetate, manganese chloride, nickel oxide and copper, examples of the inorganic acids include hydrochloric acid and nitric acid, and examples of the organic acids include formic acid, acetic acid, oxalic acid, malonic acid, maleic acid, tartaric acid, malic acid, adipic acid and citric acid.

The reaction temperature in the modification reaction is usually 20 to 350°C, preferably 60 to 300°C. In the case of modification with reactive gas, the reaction pressure is preferably ordinary pressure to 5 MPa.

### [Polyamide composition]

The polyamide composition of the present invention includes 40.0 to 98.9 mass% of a polyamide (A), 1.0 to 40.0 mass% of an ethylene/α-olefin copolymer (B), and 0.1 to 20.0 mass% of an ethylene/α-olefin copolymer (C) [provided that (A) + (B) + (C) = 100 mass%.]. The polyamide (A), the ethylene/α-olefin copolymer (B) and the ethylene/α-olefin copolymer (C) are preferably included at proportions of 59.9 to 97.0 mass%, 2.0 to 40.0 mass% and 0.1 to 20.0 mass%, respectively. The polyamide (A), the ethylene/α-olefin copolymer (B) and the ethylene/α-olefin copolymer (C) are more preferably included at proportions of 70.0 to 95.0 mass%, 3.0 to 20.0 mass% and 0.5 to 10.0 mass%, respectively. The polyamide (A), the ethylene/α-olefin copolymer (B) and the ethylene/α-olefin copolymer (C) are particularly preferably included at proportions of 75.0 to 90.0 mass%, 4.0 to 15.0 mass% and 2.0 to 10.0 mass%, respectively. The polyamide (A), the ethylene/α-olefin copolymer (B) and the ethylene/α-olefin copolymer (C) are most preferably included at proportions of 79.0 to 92.0 mass%, 4.0 to 13.0 mass% and 4.0 to 8.0 mass%, respectively. The compositional ratio being at such proportions provides a molded article excellent in balance among surface appearance, bleed-out resistance, impact resistance, and fluidity during molding.

The polyamide composition of the present invention is prepared by, for example, melting and mixing the polyamide (A), the ethylene/α-olefin copolymer (B) and the ethylene/α-olefin copolymer (C), and an additive to be, if necessary, compounded, by any of various conventionally known methods. Specifically, the composition is obtained by simultaneously or sequentially charging the respective components into, for example, a Henschel mixer, a V-type blender, a tumbler mixer or a ribbon blender and mixing the components, and then melt kneading the mixture by, for example, a monoaxial extruder, a multiaxial extruder, a kneader or a Banbury mixer. In particular, use of an apparatus excellent in kneading performance, such as a multiaxial extruder, a kneader or a Banbury mixer, provides a high-quality polyamide composition in which the respective components are more uniformly dispersed. Any other additive such as an antioxidant can also be, if necessary, added at any stage.

### [Method for producing polyamide composition]

The polyamide composition of the present invention can also be produced by the following production method.

A method for producing a polyamide composition, including
a step of mixing
   40.0 to 98.9 mass% of a polyamide (A),
   1.0 to 40.0 mass% of an ethylene/α-olefin copolymer (B) satisfying the following requirements (b-1) to (b-3), and
   an ethylene/α-olefin copolymer (C') produced by the following process (α) and satisfying the following requirements (c-1) to (c-5)
      so that the content of the copolymer (C') is 0.1 to 20.0 mass%;
(b-1) having a melt flow rate (MFR) measured at 230°C and at a load of 2.16 kg of 0.1 to 200 g/10 min;
(b-2) having a content M_{B} of a backbone unit derived from a vinyl compound having a polar group being 0.01 to 10 mass%;
(b-3) including 50 to 95 mol% of a backbone unit derived from ethylene and 5 to 50 mol% of a backbone unit derived from a C3-C8 α-olefin (provided that the total amount of the backbone unit derived from ethylene and the backbone unit derived from the α-olefin is 100 mol%); and
(c-1) having a Brookfield viscosity (BF viscosity) at 150°C of 1 to 5000 mPa·s;
(c-2) being a modified copolymer to which a substituent other than a saturated hydrocarbon is imparted, and having a content Mc of the substituent imparted being 0.1 to 20 mass%;
(c-3) including 30 to 80 mol% of a backbone unit derived from ethylene and 20 to 70 mol% of a backbone unit derived from a C3-C20 α-olefin (provided that the total amount of the backbone unit derived from ethylene and the backbone unit derived from a C3-C20 α-olefin is 100 mol%);
(c-4) having no observed melting point in a temperature range from -100°C to 150°C as measured in differential scanning calorimetry (DSC); and
(c-5) having a weight average molecular weight (Mw) determined by gel permeation chromatography (GPC) of in a range from 1,000 to 50,000;
process (α): a process comprising
   a step of solution polymerization of ethylene and the α-olefin in the presence of a catalyst system including
   a bridged metallocene compound (a) represented by formula 1, and
   at least one compound (b) selected from the group consisting of an organoaluminum oxy compound (b1) and a compound (b2) that reacts with the bridged metallocene compound (a) to form an ion pair, 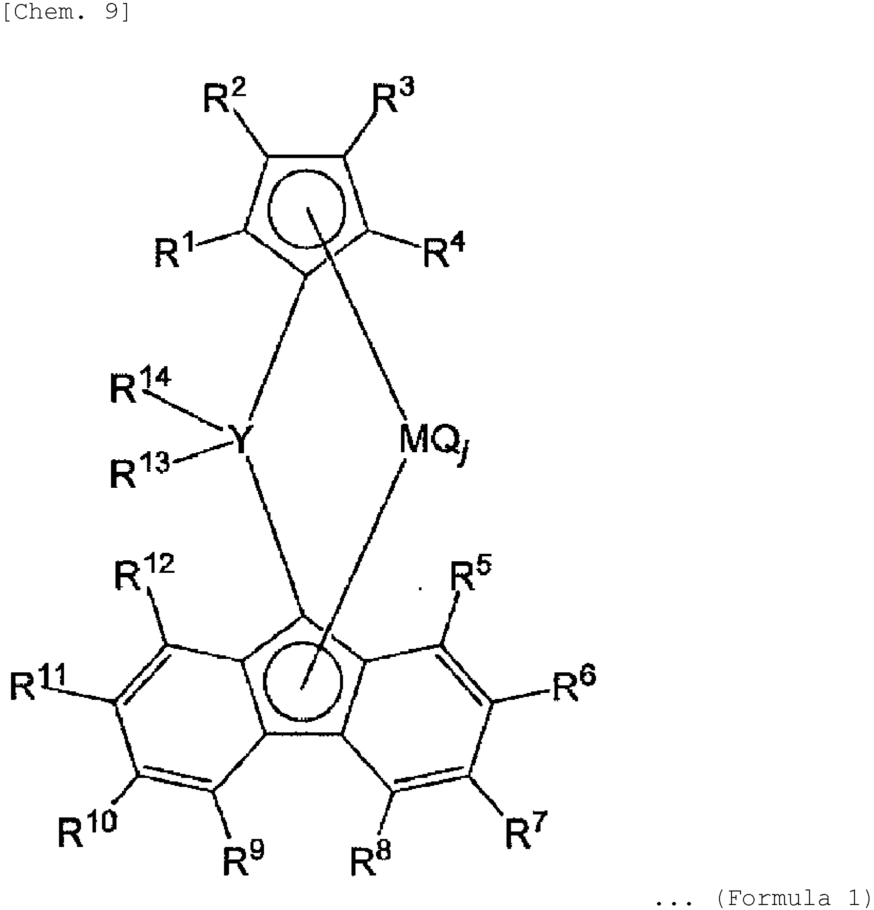
      wherein R¹, R², R³, R⁴, R⁵, R⁸, R⁹ and R¹² are each independently a hydrogen atom, a hydrocarbon group or a silicon-containing hydrocarbon group, and a plurality of adjacent groups among R¹, R², R³, R⁴, R⁵, R⁸, R⁹ and R¹² may be linked to each other to form a ring structure,
      R⁶ and R¹¹ are the same groups as each other, and are each a hydrogen atom, a hydrocarbon group or a silicon-containing hydrocarbon group,
      R⁷ and R¹⁰ are the same groups as each other, and are each a hydrogen atom, a hydrocarbon group or a silicon-containing hydrocarbon group,
      R⁶ and R⁷ may be bonded to a C2-C3 hydrocarbon to form a ring structure,
      R¹⁰ and R¹¹ may be bonded to a C2-C3 hydrocarbon to form a ring structure,
      R⁶, R⁷, R¹⁰ and R¹¹ are not hydrogen atoms at the same time;
      Y is a carbon atom or a silicon atom;
      either or both of R¹³ and R¹⁴ is/are each independently an aryl group;
      M is Ti, Zr or Hf;
      Q is independently a halogen atom, a hydrocarbon group, an anion ligand, or a neutral ligand capable of coordinating to a lone electron pair; and
      j is an integer of 1 to 4.

### [Additive]

The polyamide composition of the present invention may include, if necessary, usually 0.01 to 10 parts by mass, preferably 0.1 to 5 parts by mass of any additive(s) such as other synthetic resin, other rubber, an antioxidant, a heat stabilizer, a weather stabilizer, a slipping agent, an antiblocking agent, a nucleating agent, a pigment, a hydrochloric acid absorbent and/or a copper inhibitor, per 100 parts by mass of the polyamide composition, in addition to the polyamide (A), the ethylene/α-olefin copolymer (B) and the ethylene/α-olefin copolymer (C), as long as the objects of the present invention are not impaired. Such an additive may be added at the stage of preparation of the polyamide composition, or may be added before, during or after preparation of the ethylene/α-olefin copolymer (B) or the ethylene/α-olefin copolymer (C).

### [Filler]

A filler-containing polyamide composition may also be provided which further includes usually 1 to 100 parts by mass, preferably 5 to 80 parts by mass, more preferably 10 to 70 parts by mass of a filler per 100 parts by mass of the polyamide composition. Such a filler-containing polyamide composition is useful in a case where a more enhancement in mechanical strength of a molded article is desired or in an application where a molded article having an adjusted linear expansion coefficient (rate of mold shrinkage) is needed.

Examples of the filler include filling agents such as a fibrous filling agent, a granular filling agent and a plate-like filling agent. Specific examples of the fibrous filling agent include glass fiber, carbon fiber and aramid fiber, and suitable examples of the glass fiber include a chopped strand having an average fiber diameter of 6 to 14 µm. Specific examples of such a granular or plate-like filling agent include calcium carbonate, mica, a glass flake, glass balloon, magnesium carbonate, silica, talc, clay, pulverized products of carbon fiber or aramid fiber. Such a filler is not included in the above-mentioned additive.

### [Molded article]

The polyamide composition and the filler-containing polyamide composition of the present invention can be molded into various molded articles by a known molding method such as injection molding, extrusion, inflation molding, blow molding, extrusion blow molding, injection blow molding, press molding, vacuum forming, calendering or foam molding, and can be applied to known various applications.

### Examples

Hereinafter, the present invention will be more specifically described based on Examples, but the present invention is not limited to these Examples. Raw material components used in Examples and Comparative Examples are as follows.

### [Polyamide (A)]

Nylon 12 (A-1): UBESTA 3014U manufactured by UBE Corporation, melt temperature 179°C, density (measurement method ISO 1183-3) 1020 kg/m³.

### [Ethylene/α-olefin copolymer (B)]

The method for measuring properties of an ethylene/α-olefin copolymer (B-1) used in Examples and Comparative Examples, and the results thereof are described below.

### <MFR>

The melt flow rate (MFR) was measured in conditions of 230°C and a load of 2.16 kg, and as a result, was 2.3 g/10 min.

### <Amount of modification M_{B}>

The amount of modification M_{B} (content of maleic anhydride) was 1.0 mass%. The amount of modification M_{B} of the ethylene/α-olefin copolymer (B) was here determined from a calibration curve separately created based on a peak intensity at a wavenumber of 1780 cm⁻¹ assigned to a carbonyl group in FT-IR.

### <Density>

The density D_{B} measured according to ASTM D1505 was 866 kg/m³.

### [Production Example 1] Production of ethylene/α-olefin copolymer (B)

The method for producing the ethylene/α-olefin copolymer (B-1) is shown below.

An ethylene/1-butene copolymer (EBR) (r-1) shown below was used.

Ethylene/1-butene copolymer (r-1): density (ATSM D1505) 861 kg/m³, MFR (ASTM D1238, at 230°C and a load of 2.16 kg) 0.9 g/10 min, ethylene-derived backbone content 81 mol%, 1-butene-derived backbone content 19 mol%.

10 kg of the ethylene/1-butene copolymer (EBR) (r-1), and a solution in which 60 g of maleic anhydride (MAH) and 15 g of 2,5-dimethyl-2,5-di-(t-butylperoxy)-3-hexyne (trade name PERHEXA 25B) were dissolved in acetone were blended. Next, the resultant blended product obtained was loaded through a hopper of an axial extruder having a screw diameter of 30 mm and a L/D of 40, and extruded into a strand at a resin temperature of 200°C, a rotational speed of the screw of 240 rpm, and an amount of ejection of 12 kg/hr. The strand obtained was sufficiently cooled and then granulated, to give the ethylene/α-olefin copolymer (B-1).

### [Ethylene/α-olefin copolymer (C)]

The methods for measuring various properties of the ethylene/α-olefin copolymer (C) are as follows.

### <Brookfield (BF) viscosity (mPa·s) at 150°C>

The apparent viscosity (Brookfield viscosity) at 150°C was measured by a method described in JIS K7117-1.

### <Amount of modification M_{C}>

The amount of modification M_{C} of the ethylene/α-olefin copolymer (C) was measured using ECX400P nuclear magnetic resonance apparatus manufactured by JEOL Ltd. and using 1,1,2,2-tetrachloroethane-d2 as a solvent. The sample concentration was 20 mg/0.6 mL, the measurement temperatures were 120°C and room temperature, the observation nuclear was 1H (400 MHz), the sequence was single pulse, the pulse width was 6.5 µ/s(45° pulse), the repetition time was 7.0 seconds, the number of scans was 512, and the reference for the determination of chemical shifts was a solvent peak at 5.91 ppm assigned to CHCl₂CHCl₂ in 1,1,2,2-tetrachloroethane-d2.

The amount of modification M_{C} of the ethylene/α-olefin copolymer (C) was calculated from the area ratio between a peak assigned to the ethylene/α-olefin-derived structure (polymer main chain) and a peak assigned to the maleic anhydride-derived structure, in a ¹H-NMR spectrum measured as described above.

### <Ethylene content (mol%)>

The ethylene content of the ethylene/α-olefin copolymer (C) was measured using ECP500 nuclear magnetic resonance apparatus manufactured by JEOL Ltd. and using a mixed solvent of o-dichlorobenzene/deuteriobenzene (80/20 vol%) as a solvent. The sample concentration was 55 mg/0.6 mL, the measurement temperature was 120°C, the observation nuclear was ¹³C (125 MHz), the sequence was single pulse proton decoupling, the pulse width was 4.7 µ/s (45° pulse), the repetition time was 5.5 seconds, the number of scans was 10000 or more, and the reference for the determination of chemical shifts was 27.50 ppm.

The ethylene content of the ethylene/α-olefin copolymer (C) was determined from a ¹³C-NMR spectrum measured as described above, based on reports of "Kobunshi Bunseki Handbook (Polymer Analysis Handbook)" (published from Asakura Publishing Co., Ltd., pp. 163-170), G. J. Ray (Macromolecules, 10, 773 (1977)), J. C. Randall (Macro-molecules, 15, 353 (1982)), and K. Kimura et al. (Polymer, 25, 4418 (1984)).

### <Melting point>

All the melting peaks were measured using X-DSC-7000 manufactured by Seiko Instruments Inc. Approximately 8 mg of a sample was added into an easily sealable aluminum pan, and the pan was arranged in a DSC cell. The DSC cell was placed in a nitrogen atmosphere, and the temperature was raised from room temperature to 150°C at 10°C/min, then held at 150°C for 5 minutes, and then lowered at 10°C/min to cool the DSC cell to -100°C (cooling process). Next, the temperature was held at -100°C for 5 minutes and then raised to 15°C at 10°C/min. In the enthalpy curve during the heating process, the temperature at the peak top was adopted as the melting point (Tm), and the total amount of endothermic heat associated with melting was determined as the heat of fusion (ΔH). The sample was considered as having no observed melting peak in the case no peak was observed or in the case a value of the heat of fusion (ΔH) was 1 J/g or less. The melting point (Tm) and the heat of fusion (ΔH) were determined based on JIS K7121.

### <Weight average molecular weight (Mw)>

The molecular weight (Mw) of the ethylene/α-olefin copolymer (C) was determined by the following high-performance GPC measurement apparatus.
High-performance GPC measurement apparatus: HLC8320GPC manufactured by TOSOH CORPORATION
Mobile Phase: THF (manufactured by FUJIFILM Wako Pure Chemical Corporation, stabilizer-free, liquid chromatography grade)
Columns: Two TSKgel Super Multipore HZ-M columns manufactured by TOSOH CORPORATION were connected in series
Sample concentration: 5 mg/mL
Mobile phase flow rate: 0.35 mL/min
Measurement temperature: 40°C
Standard sample for calibration curve: PStQuick MP-M manufactured by TOSOH CORPORATION

### <Density>

The density was measured according to JIS K 2249.

### [Preparation of ethylene/α-olefin copolymer (C)]

The methods for preparing ethylene/α-olefin copolymers (C-1) to (C-4) used in Examples are shown below.

### [Synthesis Example 1]

Synthesis of [ethylene(η⁵-cyclopentadienyl)(η⁵-2,7-di-tert-butylfluorenyl)]zirconium dichloride

[Ethylene(η⁵-cyclopentadienyl)(η⁵-2,7-di-tert-butylfluorenyl)]zirconium dichloride was synthesized by the method described in Japanese Patent No. 4367687.

### [Synthesis Example 2]

Synthesis of [methylphenylmethylene(η⁵-cyclopentadienyl)(η⁵-2,7-di-tert-butylfluorenyl)]zirconium dichloride

[Methylphenylmethylene(η⁵-cyclopentadienyl)(η⁵-2,7-di-tert-butylfluorenyl)]zirconium dichloride was synthesized by the method described in Japanese Patent No. 6496533.

### [Production Example 2] Production of ethylene/propylene copolymer (C-1)

A 2 L internal volume stainless steel autoclave thoroughly purged with nitrogen was loaded with 760 mL of heptane and 120 g of propylene, the temperature of the system was raised to 150°C, and thereafter 0.85 MPa of hydrogen and 0.19 MPa of ethylene were supplied to the autoclave, to allow the total pressure to be 3 MPaG. Next, 0.4 mmol of triisobutylaluminum, 0.0002 mmol of [methylphenylmethylene(η5-cyclopentadienyl)(η5-2,7-di-tert-butylfluorenyl)]zirconium dichloride, and 0.002 mmol of N,N-dimethylanilinium tetrakis(pentafluorophenyl)borate were injected into the autoclave with nitrogen, and polymerization was initiated by stirring at a rotational speed of 400 rpm. Thereafter, only ethylene was continuously supplied to the autoclave to keep the total pressure at 3 MPaG, and the polymerization was carried out at 150°C for 5 minutes. The polymerization was terminated by addition of a small amount of ethanol into the system, and thereafter unreacted ethylene, propylene and hydrogen were purged. The resultant polymerization solution obtained was washed with 1000 mL of 0.2 mol/L hydrochloric acid three times and then with 1000 mL of distilled water three times, and dried over magnesium sulfate, thereafter the solvent was distilled off under reduced pressure, the resultant residue was dried at 80°C under reduced pressure overnight, to give a crude ethylene/propylene copolymer.

A 1 L internal volume stainless steel autoclave was loaded with 100 mL of a 0.5 mass% hexane solution of a Pd/alumina catalyst and 500 mL of a 30 mass% hexane solution of the crude ethylene/propylene copolymer obtained, and the autoclave was tightly closed and was purged with nitrogen. Next, the temperature was raised to 140°C under stirring, the inside of the system was purged with hydrogen, thereafter the pressure was increased to 1.5 MPa with hydrogen, and hydrogenation reaction was carried out for 15 minutes, to give an ethylene/propylene copolymer. The Mw of the ethylene/propylene copolymer was 5200 g/mol.

Subsequently, a 200 mL glass reactor with a stirrer equipped with a nitrogen blowing tube, a water cooling condenser, a thermometer and two dripping funnels was charged with 100 g of the ethylene/propylene copolymer obtained, the temperature was raised to 120°C and then nitrogen bubbling was started, and the inside of the system was kept warm at 160°C. Thereafter, 6.6 g of maleic anhydride (which was made to be in a liquid state by warming around 70°C) with which one of the two dripping funnels was charged in advance and 1.3 g of di-tert-butyl peroxide with which the other of the two dripping funnels was charged in advance were supplied to the glass reactor over 5 hours, and were allowed to react over 1 hour after completion of the supplying. Next, the temperature was further raised to 175°C, the pressure in the inside of the system was released and then reduced for 1 hour by a vacuum pump with gradual ventilation with nitrogen, and thus impurities (unreacted maleic anhydride and decomposed products of di-tert-butyl peroxide) were removed. The above operations provided a modified ethylene/propylene copolymer (C-1). In the ethylene/propylene copolymer (C-1) obtained, the BF viscosity at 150°C was 70 mPa·s, the M_{C} was 5 mass%, the ethylene content was 49 mol%, no melting point (melting peak) was observed, the Mw was 5600 g/mol, the density D_{C} was 874 kg/m³, and the acid value was 60 mgKOH/g. In other words, the difference |D_{B}-D_{C}| between the density D_{C} and the density D_{B} of the ethylene/α-olefin copolymer (B-1) was 8 kg/m³.

### [Production Example 3] Production of ethylene/propylene copolymer (C-2)

A 2 L volume continuous polymerization reactor equipped with a stirring blade and thoroughly purged with nitrogen was loaded with 1 L of dehydrated and purified hexane, a 96 mmol/L hexane solution of ethylaluminum sesquichloride

(Al(C₂H₅)_{1.5}·Cl_{1.5}) was continuously supplied to the reactor at a rate of 500 mL/h for 1 hour, and thereafter a 16 mmol/L hexane solution of VO(OC₂H₅)Cl₂ as a catalyst and hexane were continuously supplied to the reactor at rates of 500 mL/h and 500 mL/h, respectively. On the other hand, the polymerization solution was continuously withdrawn from the top of the reactor so that the amount of the polymerization solution in the reactor would be constant at 1 L.

Next, 36 L/h of ethylene gas, 36 L/h of propylene gas and 30 L/h of hydrogen gas were supplied to the reactor through bubbling tubes. The copolymerization reaction was carried out at 35°C while circulating a refrigerant through a jacket attached to the outside of the reactor. In this manner, a polymerization solution including an ethylene/propylene copolymer was obtained.

The polymerization solution obtained was washed with 500 mL of 0.2 mol/L hydrochloric acid with respect to 1 L of the polymerization solution three times and then with 500 mL of distilled water with respect to 1 L of the polymerization solution three times, and was dried over magnesium sulfate, and thereafter the solvent was distilled off under reduced pressure. The resultant viscous liquid obtained was dried under reduced pressure at 130°C for 24 hours, to give an ethylene/propylene copolymer. The Mw of the ethylene/propylene copolymer was 8600 g/mol.

Subsequently, a 200 mL glass reactor with a stirrer equipped with a nitrogen blowing tube, a water cooling condenser, a thermometer and two dripping funnels was charged with 100 g of the copolymer, the temperature was raised to 120°C and then nitrogen bubbling was started, and the inside of the system was kept warm at 160°C. Thereafter, 2.8 g of maleic anhydride (which was made to be in a liquid state by warming around 70°C) with which one of the two dripping funnels was charged in advance and 0.6 g of di-tert-butyl peroxide with which the other of the two dripping funnels was charged in advance were supplied to the glass reactor over 2 hours, and were allowed to react over 1 hour after completion of the supplying. Next, the temperature was further raised to 175°C, the pressure in the inside of the system was released and then reduced for 1 hour by a vacuum pump with gradual ventilation with nitrogen, and thus impurities (unreacted maleic anhydride and decomposed products of di-tert-butyl peroxide) were removed. The above operations provided a modified ethylene/propylene copolymer (C-2). In the ethylene/propylene copolymer (C-2) obtained, the BF viscosity at 150°C was 160 mPa/s, the M_{C} was 2 mass%, the ethylene content was 53 mol%, no melting point (melting peak) was observed, the Mw was 10300 g/mol, the density D_{C} was 860 kg/m3, and the acid value was 25 mgKOH/g. In other words, the difference |D_{B}-D_{C}| between the density D_{C} and the density D_{B} of the ethylene/α-olefin copolymer (B-1) was 6 kg/m³.

### [Production Example 4] Production of ethylene/propylene copolymer (C-3)

The same reaction as in Production Example 3 was performed and impurities were removed in the same manner, except that an ethylene/propylene copolymer having a Mw of 12900 g/mol was obtained by appropriately controlling the supply rates of ethylene gas, propylene gas and hydrogen gas, the amounts of maleic anhydride and di-tert-butyl peroxide were changed to 3.8 g and 0.8 g respectively and addition of maleic anhydride and di-tert-butyl peroxide was made over 3 hours in Production Example 3. The above operations provided a modified ethylene/propylene copolymer (C-3). In the ethylene/propylene copolymer (C-3) obtained, the BF viscosity at 150°C was 680 mPa·s, the M_{C} was 3 mass%, the ethylene content was 53 mol%, no melting point (melting peak) was observed, the Mw was 17200 g/mol, the density D_{C} was 870 kg/m³, and the acid value was 35 mgKOH/g. In other words, the difference |D_{B}-D_{C}| between the density D_{C} and the density D_{B} of the ethylene/α-olefin copolymer (B-1) was 4 kg/m³.

### [Production Example 5] Production of ethylene/propylene copolymer (C-4)

The same reaction as in Production Example 3 was performed and impurities were removed in the same manner, except that an ethylene/propylene copolymer having a Mw of 1900 g/mol was obtained by appropriately controlling the supply rates of ethylene gas, propylene gas and hydrogen gas, the amounts of maleic anhydride and di-tert-butyl peroxide were changed to 13 g and 2.6 g respectively and addition of maleic anhydride and di-tert-butyl peroxide was made over 8 hours in Production Example 3. The above operations provided a modified ethylene/propylene copolymer (C-4). In the ethylene/propylene copolymer (C-4) obtained, the BF viscosity at 150°C was 26 mPa·s, the M_{C} was 10 mass%, the ethylene content was 48 mol%, no melting point (melting peak) was observed, the Mw was 2900 g/mol, the density D_{C} was 898 kg/m³, and the acid value was 120 mgKOH/g. In other words, the difference |D_{B}-D_{C}| between the density D_{C} and the density D_{B} of the ethylene/α-olefin copolymer (B-1) was 26 kg/m³.

### [Production Example 6] Production of ethylene/propylene copolymer (C-5)

The same reaction as in Production Example 2 was performed and impurities were removed in the same manner, except that the amounts of maleic anhydride and di-tert-butyl peroxide were changed to 14.1 g and 2.8 g respectively in modification operations of the ethylene/propylene copolymer having a Mw of 5200 in Production Example 2. The above operations provided a modified ethylene/propylene copolymer (C-5). In the ethylene/propylene copolymer (C-5) obtained, the BF viscosity at 150°C was 300 mPa·s, the M_{C} was 10 mass%, the ethylene content was 49 mol%, no melting point (melting peak) was observed, the Mw was 7300 g/mol, the density D_{C} was 900 kg/m³, and the acid value was 120 mgKOH/g. In other words, the difference |D_{B}-D_{C}| between the density D_{C} and the density D_{B} of the ethylene/α-olefin copolymer (B-1) was 40 kg/m³.

### [Production Example 7] Production of ethylene/propylene copolymer (C-6)

A 2 L internal volume stainless steel autoclave thoroughly purged with nitrogen was loaded with 910 mL of heptane and 45 g of propylene, the temperature of the system was raised to 130°C, and thereafter 2.24 MPa of hydrogen and 0.09 MPa of ethylene were supplied to the autoclave, to allow the total pressure to be 3 MPaG. Next, 0.4 mmol of triisobutylaluminum, 0.0006 mmol of [diphenylmethylene(η⁵-3-n-butylcyclopentadienyl)(η⁵-2,7-di-tert-butylfluorenyl)]zirconium dichloride, and 0.006 mmol of N,N-dimethylanilinium tetrakis(pentafluorophenyl)borate were injected into the autoclave with nitrogen, and polymerization was initiated by stirring at a rotational speed of 400 rpm. Thereafter, only ethylene was continuously supplied to the autoclave to keep the total pressure at 3 MPaG, and the polymerization was carried out at 130°C for 5 minutes. The polymerization was terminated by addition of a small amount of ethanol into the system, and thereafter unreacted ethylene, propylene and hydrogen were purged. The resultant polymerization solution obtained was washed with 1000 mL of 0.2 mol/L hydrochloric acid three times and then with 1000 mL of distilled water three times, and dried over magnesium sulfate, thereafter the solvent was distilled off under reduced pressure, and to give a crude ethylene/propylene copolymer.

A 1 L internal volume stainless steel autoclave was loaded with 100 mL of a 0.5 mass% hexane solution of a Pd/alumina catalyst and 500 mL of a 30 mass% hexane solution of the crude ethylene/propylene copolymer obtained, and the autoclave was tightly closed and was purged with nitrogen. Next, the temperature was raised to 140°C under stirring, the inside of the system was purged with hydrogen, thereafter the pressure was increased to 1.5 MPa with hydrogen, and hydrogenation reaction was carried out for 15 minutes. The resultant reaction liquid was subjected to filtration to separate a hydrogenation catalyst, thereafter the solvent was distilled off under reduced pressure, and the resultant residue was dried at 80°C under reduced pressure for 24 hours. Furthermore, by use of Type 2-03 thin film distillation apparatus manufactured by Shinko Pantec Co., Ltd., thin film distillation was carried out at a set temperature of 180°C and a flow rate of 3.1 ml/min with the degree of reduction in pressure being kept at 400 Pa, to give an ethylene/propylene copolymer. The Mw of the ethylene/propylene copolymer was 2,700.

Subsequently, a 200 mL glass reactor with a stirrer equipped with a nitrogen blowing tube, a water cooling condenser, a thermometer and two dripping funnels was charged with 100 g of the copolymer (A-1) obtained in Production Example 1, the temperature was raised to 120°C and then nitrogen bubbling was started, and the inside of the system was kept warm at 160°C. Thereafter, 14.1 g of maleic anhydride (which was made to be in a liquid state by warming around 70°C) with which one of the two dripping funnels was charged in advance and 2.8 g of di-tert-butyl peroxide with which the other of the two dripping funnels was charged in advance were supplied to the glass reactor over 5 hours, and were allowed to react over 1 hour after completion of the supplying. Next, the temperature was further raised to 175°C, the pressure in the inside of the system was released and then reduced for 1 hour by a vacuum pump with gradual ventilation with nitrogen, and thus impurities (unreacted maleic anhydride and decomposed products of di-tert-butyl peroxide) were removed. The above operations provided a modified ethylene/propylene copolymer (C-6). In the ethylene/propylene copolymer (C-6) obtained, the BF viscosity at 150°C was 55 mPa·s, the M_{C} was 10 mass%, the ethylene content was 52 mol%, no melting point (melting peak) was observed, the Mw was 3600 g/mol, the density D_{C} was 900 kg/m3, and the acid value was 120 mgKOH/g. In other words, the difference |D_{B}-D_{C}| between the density D_{C} and the density D_{B} of the ethylene/α-olefin copolymer (B-1) was 40 kg/m³.

### [Production Example 8] Production of ethylene/propylene copolymer (C'-1)

An ethylene/propylene copolymer (C'-1) was obtained by appropriately controlling the supply rates of ethylene gas, propylene gas and hydrogen gas in Production Example 3. No subsequent modification was carried out for the ethylene/propylene copolymer (C'-1). In the ethylene/propylene copolymer (C'-1), which was not modified, the BF viscosity at 150°C was 10 mPa·s, the M_{C} was 0 mass%, the ethylene content was 53 mol%, no melting point (melting peak) was observed, the Mw was 2700 g/mol, the density was 838 kg/m3, and the acid value was < 0.01 mgKOH/g. In other words, the difference |D_{B}-D_{C}| between the density D_{C}' and the density D_{B} of the ethylene/α-olefin copolymer (B-1) was 28 kg/m³.

### [Examples 1 to 8, Comparative Examples 1 and 2, and Reference Example 1]

The nylon 12 (A-1), the ethylene/α-olefin copolymer (B-1), the ethylene/α-olefin copolymers (C-1) to (C-6) and (C'-1) were mixed using a Henschel mixer at a formulation ratio described in the column Formulation in Table 1, to give a dry blended product. Next, the resultant dry blended product was supplied to a biaxial extruder (L/D = 40, 30 mmϕ) set at 245°C, to give a polyamide composition pellet. The resultant polyamide composition pellet obtained was dried at 80°C all night and all day, and thereafter subjected to injection molding in the following conditions, to give a test piece for testing properties.

### (Injection molding conditions)

Cylinder temperature: 245°C
Injection pressure: 400 kg/cm²
Mold temperature: 80°C
Subsequently, properties of the polyamide resin composition were evaluated by the following methods.

### (1) Surface appearance

The surface appearance of a test piece having a thickness of 1/8 inches was observed, and evaluated according to the following criteria.

### (Evaluation criteria)

O: no lump confirmed by observation with the naked eye or with an optical microscope.

X: any lump confirmed by observation with the naked eye or with an optical microscope.

### (2) Bleed-out resistance

The surface of a test piece having a thickness of 1/8 inches was observed and traced with a finger, and evaluated according to the following criteria.

### (Evaluation criteria)

O: no bleed-out of any liquid component confirmed.

X: bleed-out of any liquid component confirmed.

### (3) Bending test

A test piece having a thickness of 1/8 inches was used and tested at a rate of 5 mm/min according to ASTM D790, and the bending elastic modulus (FM; kg/cm2) was measured. The test piece was conditioned in a dry state at a temperature of 23°C for 2 days.

### (4) Izod impact test

A test piece having a thickness of 1/8 inches was used, and the notched Izod impact strength was measured at -40°C according to ASTM D256. The test piece was conditioned in a dry state at a temperature of 23°C for 2 days.

### (5) Fluidity (spiral flow)

The distance of flow was measured by injection molding into a mold having a 3.8-mmϕ semicircular spiral groove with an injection molding machine having a mold clamping force of 50 t, at a cylinder temperature of 280°C, an injection pressure of 100 MPa and a mold temperature of 80°C.

### The measurement results are shown in Table 1.

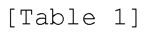

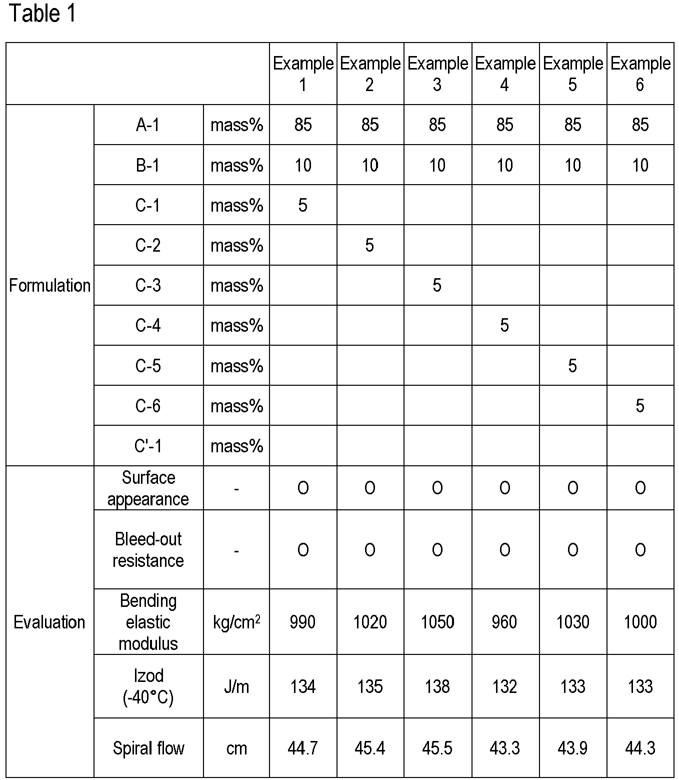

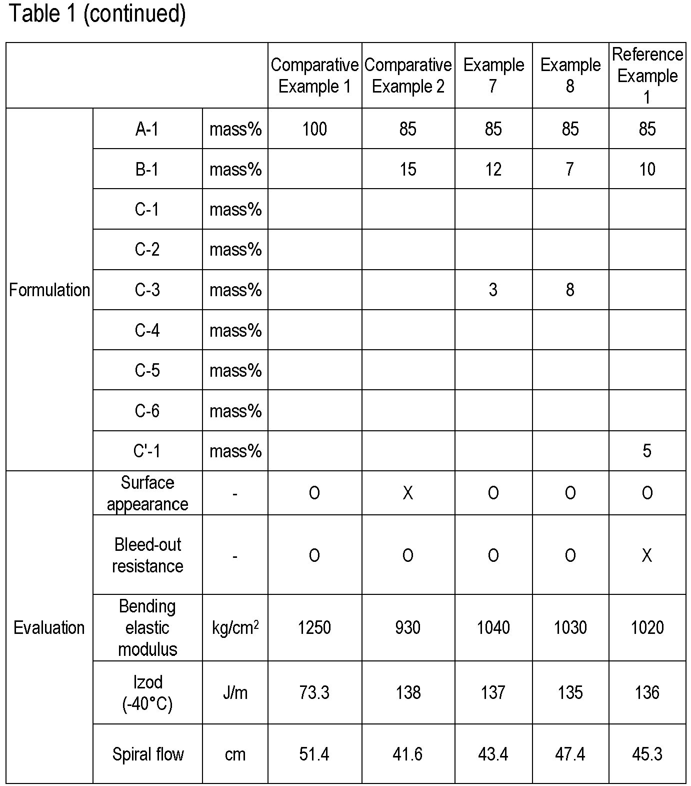

## Claims

1. A polyamide composition comprising:
40.0 to 98.9 mass% of a polyamide (A);
1.0 to 40.0 mass% of an ethylene/α-olefin copolymer (B) satisfying the following requirements (b-1) to (b-3); and
0.1 to 20.0 mass% of an ethylene/α-olefin copolymer (C) satisfying the following requirements (c-1) to (c-5), provided that (A) + (B) + (C) = 100 mass%;
(b-1) having a melt flow rate (MFR) measured at 230°C and at a load of 2.16 kg of 0.1 to 200 g/10 min;
(b-2) having a content M_{B} of a backbone unit derived from a vinyl compound having a polar group being 0.01 to 10 mass%; and
(b-3) comprising 50 to 95 mol% of a backbone unit derived from ethylene and 5 to 50 mol% of a backbone unit derived from a C3-C8 α-olefin, provided that a total amount of the backbone unit derived from ethylene and the backbone unit derived from the α-olefin is 100 mol%; and
(c-1) having a Brookfield viscosity (BF viscosity) at 150°C of 1 to 5000 mPa·s;
(c-2) being a modified copolymer to which a substituent other than a saturated hydrocarbon is imparted, and having a content Mc of the substituent imparted being 0.1 to 20 mass%;
(c-3) comprising 30 to 80 mol% of a backbone unit derived from ethylene and 20 to 70 mol% of a backbone unit derived from a C3-C20 α-olefin, provided that a total amount of the backbone unit derived from ethylene and the backbone unit derived from a C3-C20 α-olefin is 100 mol%;
(c-4) having no observed melting point in a temperature range from -100°C to 150°C as measured in differential scanning calorimetry (DSC); and
(c-5) having a weight average molecular weight (Mw) determined by gel permeation chromatography (GPC) of in a range from 1,000 to 50,000.

2. The polyamide composition according to claim 1, wherein the ethylene/α-olefin copolymer (C) in the requirement (c-2) is a modified copolymer modified by one or more selected from a compound having a substituent other than a saturated hydrocarbon group and having a carbon-carbon unsaturated bond.

3. The polyamide composition according to claim 1 or 2, wherein the ethylene/α-olefin copolymer (C) further satisfies the following requirement (c-6):
(c-6) having a density D_{C} of the ethylene/α-olefin copolymer (C) as measured according to JIS K2249 being 820 to 910 kg/m3, and having a difference |D_{B}-D_{C}| of the density D_{C} from a density D_{B} of the ethylene/α-olefin copolymer (B) as measured according to ASTM D1505 being 50 kg/m³ or less.

4. The polyamide composition according to any one of claims 1 to 3, wherein the polar group in the requirement (b-2) is a carboxyl group or a carboxylic anhydride.

5. The polyamide composition according to any one of claims 1 to 4, wherein the ethylene/α-olefin copolymer (C) in the requirement (c-2) is a modified copolymer modified by one or more compounds selected from an unsaturated carboxylic acid and an unsaturated carboxylic acid derivative, and the copolymer (C) satisfies the following requirement (c-7):
(c-7) having an acid value of 0.1 to 200 mgKOH/g.

6. The polyamide composition according to any one of claims 1 to 5, wherein the vinyl compound having a polar group in the requirement (b-2) is one or more selected from maleic acid and maleic anhydride.

7. The polyamide composition according to any one of claims 1 to 6, wherein the ethylene/α-olefin copolymer (C) in the requirement (c-2) is a modified copolymer modified by one or more compounds selected from maleic acid and maleic anhydride.

8. The polyamide composition according to any one of claims 1 to 7, wherein the ethylene/α-olefin copolymer (C) in the requirement (c-2) is a modified copolymer modified by one or more compounds selected from maleic acid and maleic anhydride, and the content M_{C} of the substituent imparted is more than 5 mass% and 20 mass% or less.

9. The polyamide composition according to any one of claims 1 to 8, wherein the ethylene/α-olefin copolymer (C) in the requirement (c-5) has a weight average molecular weight (Mw) determined by gel permeation chromatography (GPC) in a range of more than 25,000 and 50,000 or less.

10. A filler-containing polyamide composition comprising the polyamide resin composition according to any one of claims 1 to 9, and 1 to 100 parts by mass of an inorganic filler per 100 parts by mass of the polyamide composition.

11. A molded article comprising the polyamide composition according to any one of claims 1 to 9 or the filler-containing polyamide composition according to claim 10.

12. A method for producing a polyamide composition, comprising:
a step of mixing
40.0 to 98.9 mass% of a polyamide (A),
1.0 to 40.0 mass% of an ethylene/α-olefin copolymer (B) satisfying the following requirements (b-1) to (b-3), and
an ethylene/α-olefin copolymer (C') produced by the following process (α) and satisfying the following requirements (c-1) to (c-5) so that a content of the copolymer (C') is 0.1 to 20.0 mass%;
(b-1) having a melt flow rate (MFR) measured at 230°C and at a load of 2.16 kg of 0.1 to 200 g/10 min;
(b-2) having a content M_{B} of a backbone unit derived from a vinyl compound having a polar group being 0.01 to 10 mass%; and
(b-3) comprising 50 to 95 mol% of a backbone unit derived from ethylene and 5 to 50 mol% of a backbone unit derived from a C3-C8 α-olefin, provided that a total amount of the backbone unit derived from ethylene and the backbone unit derived from the α-olefin is 100 mol%; and
(c-1) having a Brookfield viscosity (BF viscosity) at 150°C of 1 to 5000 mPa·s;
(c-2) being a modified copolymer to which a substituent other than a saturated hydrocarbon is imparted, and having a content Mc of the substituent imparted being 0.1 to 20 mass%;
(c-3) comprising 30 to 80 mol% of a backbone unit derived from ethylene and 20 to 70 mol% of a backbone unit derived from a C3-C20 α-olefin, provided that a total amount of the backbone unit derived from ethylene and the backbone unit derived from a C3-C20 α-olefin is 100 mol%;
(c-4) having no observed melting point in a temperature range from -100°C to 150°C as measured in differential scanning calorimetry (DSC); and
(c-5) having a weight average molecular weight (Mw) determined by gel permeation chromatography (GPC) of in a range from 1,000 to 50,000;
process (α): a process comprising
a step of solution polymerization of ethylene and the α-olefin in the presence of a catalyst system including
a bridged metallocene compound (a) represented by formula 1, and
at least one compound (b) selected from the group consisting of an organoaluminum oxy compound (b1) and a compound (b2) that reacts with the bridged metallocene compound (a) to form an ion pair; 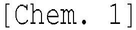 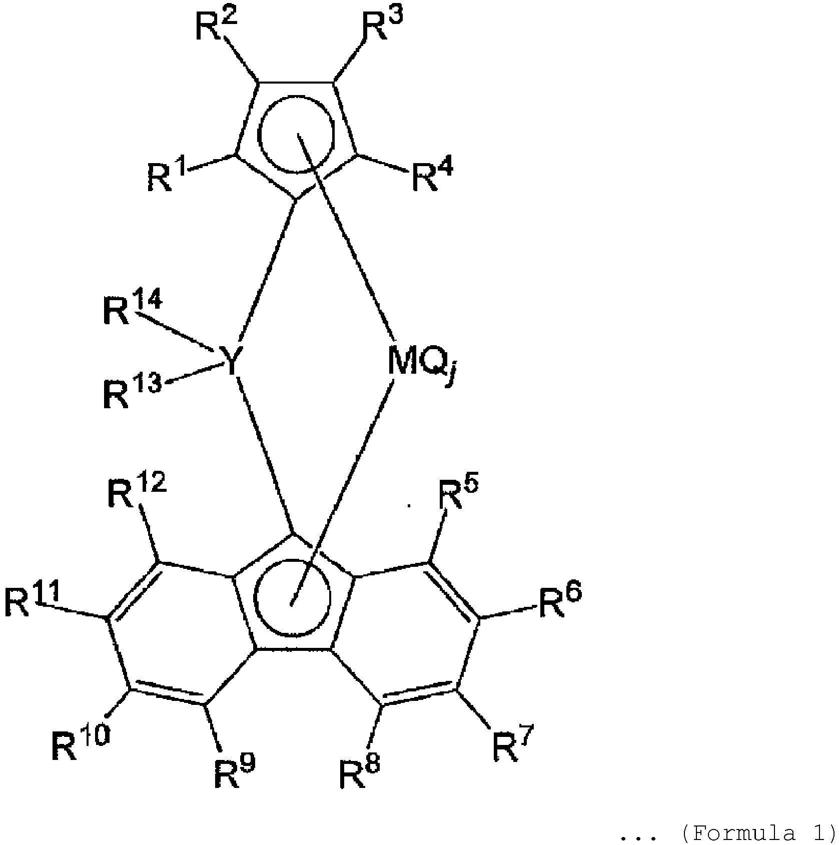
wherein R¹, R², R³, R⁴, R⁵, R⁸, R⁹ and R¹² are each independently a hydrogen atom, a hydrocarbon group or a silicon-containing hydrocarbon group, and a plurality of adjacent groups among R¹, R², R³, R⁴, R⁵, R⁸, R⁹ and R¹² may be linked to each other to form a ring structure,
R⁶ and R¹¹ are the same groups as each other, and are each a hydrogen atom, a hydrocarbon group or a silicon-containing hydrocarbon group,
R⁷ and R¹⁰ are the same groups as each other, and are each a hydrogen atom, a hydrocarbon group or a silicon-containing hydrocarbon group,
R⁶ and R⁷ may be bonded to a C2-C3 hydrocarbon to form a ring structure,
R¹⁰ and R¹¹ may be bonded to a C2-C3 hydrocarbon to form a ring structure,
R⁶, R⁷, R¹⁰ and R¹¹ are not hydrogen atoms at the same time;
Y is a carbon atom or a silicon atom;
either or both of R¹³ and R¹⁴ is/are each independently an aryl group;
M is Ti, Zr or Hf;
Q is independently a halogen atom, a hydrocarbon group, an anion ligand, or a neutral ligand capable of coordinating to a lone electron pair; and
j is an integer of 1 to 4.
